# EUROPÄISCHE PATENTSCHRIFT

(11) **EP 3 507 320 B1**
(45) Veröffentlichungstag und Bekanntmachung des Hinweises auf die Patenterteilung: **21.10.2020**
(21) Anmeldenummer: 17758568.4
(22) Anmeldetag: 04.09.2017
(51) Int. Cl.: C08G 18/50, C08G 64/18, C08G 64/30, C08G 18/44, C08G 18/46, C08G 71/04, C09J 175/04, C09J 183/04, C09J 183/08

(54) **VERWENDUNG EINES ORGANCARBONAT MODIFIZIERTEN PRAEPOLYMERS ALS EDUKT ZUR HERSTELLUNG VON ISOCYANATFREIEN UND ISOTHIOCYANATFREIEN ALKOXYSILAN-POLYMEREN**
USE OF AN ORGANOCARBONATE MODIFIED PRE-POLYMER AS AN EDUCT FOR THE PRODUCTION OF ISOCYANATE-FREE AND ISOTHIOCYANATE-FREE ALKOXYSILANE POLYMERS
UTILISATION D'UN PREPOLYMERE MODIFIE PAR ORGANOCARBONATE EN TANT QU'EDUIT POUR LA PRODUCTION DE POLYMERES D'ALKOXYSILANE SANS ISOCYANATE ET SANS ISOTHIOCYANATE

(30) Priorität: 05.09.2016 EP 16187265
(43) Veröffentlichungstag der Anmeldung: 10.07.2019
(73) Patentinhaber: merz+benteli ag, 3172 Niederwangen (CH)
(72) Erfinder: HUBER, Stefan, 4900 Langenthal (CH); BURKHARDT, Fritz, 3414 Oberburg (CH); LERF, Claude, 3280 Meyriez (CH)
(74) Vertreter: Schaad, Balass, Menzl & Partner AG
(86) Internationale Anmeldenummer: PCT/EP2017/072069
(87) Internationale Veröffentlichungsnummer: WO 2018/042030

(56) Entgegenhaltungen:
- EP-A1- 1 852 455
- EP-A2- 0 229 678
- US-A- 4 518 766

## Beschreibung

Die vorliegende Erfindung betrifft die Verwendung eines Organocarbonat modifizierten Präpolymers als Edukt zur Herstellung von isocyanatfreien und isothiocyanatfreien Alkoxysilan-Polymeren sowie die Herstellung dieser Alkoxysilan-Polymere.

Silan-modifizierte Polymere (SMP) sind dem Fachmann schon seit geraumer Zeit bekannt. Besagte Verbindungen stellen in der Regel feuchtigkeitsreaktive Polymere dar und kommen insbesondere in feuchtigkeitshärtenden Dicht- oder Klebstoffen zur Anwendung.

Allen silan-modifizierten Polymeren ist gemeinsam, dass sie nebst einem organischen Polymer-Rückgrat (auch "Backbone" genannt) mindestens eine hydrolisierbare Silylgruppe aufweisen, die über entsprechende Bindegruppen ("coupling groups") an die Polymerkette gebunden ist.

Mit den gängigen Verfahren zur Herstellung silanmodifizierter Polymere sind nur eine relativ beschränkte Anzahl an kommerziellen Produkten zugänglich. Je nach Herstellungsart ist die Auswahl möglicher Polymerketten mehr oder weniger stark beschränkt.

Nebst den zu statistisch silylierten Polymeren führenden Copolymerisations-, Pfropfcopolymerisations- und Polyadditions-Reaktionen werden die Polymere auch durch Reaktion einer Isocyanat-Gruppe mit einer gegenüber Isocyanat reaktiven Gruppe beschrieben.

So wird etwa in der WO 03/018658 ein Verfahren beschrieben, in welchem ein Silan mit einer OH-, SH- oder NHR³-Gruppe mit einem isocyanat-terminierten Präpolymer umgesetzt wird. Alternativ wird gemäss besagter Druckschrift ein Silan, das eine Isocyanat-Gruppe aufweist, mit einem gegenüber Isocyanat reaktiven Präpolymer, im Besonderen einem Präpolymer mit OH-, SH- oder NHR³-Gruppen, umgesetzt. Isocyanate sind bekanntermassen stark toxisch, was relativ strikte und teure Sicherheitsmassnahmen bei der Herstellung und Weiterverwendung dieser Verbindungen bedingt. Ausserdem ist es bei diesen Herstellungsverfahren kaum möglich, isocyanatfreie Präpolymere oder isocyanatfreie Polymere zu erhalten.

In EP-A-1371670 wird ein Verfahren beschrieben, in welchem ein Vinylpolymer mit wenigstens einer Hydroxylgruppe mit einer Verbindung umgesetzt wird, die nebst einer Silylgruppe eine Gruppe aufweist, die mit der Hydroxylgruppe reagieren kann. Es wird auch diesbezüglich spezifisch eine Isocyanatgruppe erwähnt.

In EP-A-2341116 wird eine polymere Verbindung umfassend eine Polymerkette und mindestens eine an die Polymerkette gebundene Silylgruppe beschrieben, wobei die Polymerkette und die Silylgruppe durch eine β-Hydroxyamin-Gruppe miteinander verbunden sind. Die als Edukt für die Synthese dieser Polymere verwendeten Amin- oder Epoxy-terminierten Präpolymere sind im grossen Massstab nur beschränkt verfügbar und relativ teuer. Grosstechnisch werden die Edukte als Zusatz in Polymerzusammensetzungen verwendet, nicht aber als Präpolymere für ein eigenständiges Polymer, was ihre Verfügbarkeit stark beeinträchtigt. Ausgehend davon besteht die Aufgabe der vorliegenden Erfindung darin, ein Präpolymer als Edukt für die Herstellung von Alkoxysilan-Polymeren sowie deren Herstellung mittels des Präpolymers bereitzustellen, wobei der Einsatz von Isocyanaten und Thioisocyanaten vermieden werden soll. Auch sollen das Polymer und das Präpolymer durch ein sehr einfaches Verfahren hergestellt werden und deren Eigenschaften sollen aus einer grossen Variabilität möglicher Eigenschaften gezielt eingestellt werden können.

Die Aufgabe wird erfindungsgemäss gelöst durch die Verwendung des Präpolymers gemäss Anspruch 1 und das Verfahren zur Herstellung der Alkoxysilan-Polymere gemäss Anspruch 13.

Bevorzugte Ausführungsformen sind in den abhängigen Ansprüchen wiedergegeben.

Die vorliegende Erfindung betrifft demnach die Verwendung eines Präpolymers mit wenigstens durchschnittlich 1.5 Carbonatgruppen der Formeln (I) und (II) oder Thiocarbonatgruppen der Formeln (Ia) und (IIa), Carbamatgruppen der Formeln (XI) und (XII) oder Thiocarbamatgruppen der Formeln (XIa) und (XIIa) 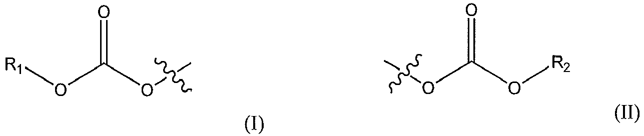 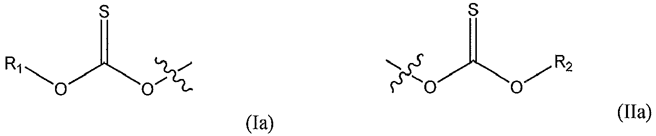 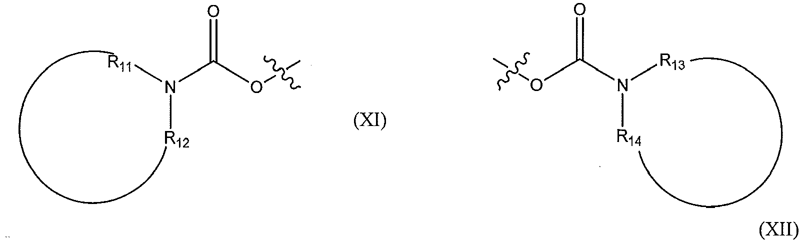 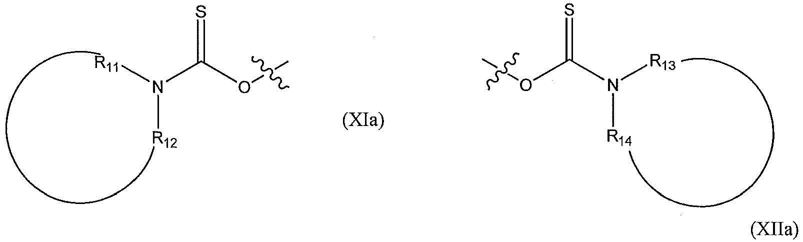
in denen R¹ und R² unabhängig voneinander lineare oder verzweigte C₁ bis C₆ Alkyl-, C₁ bis C₆ Acyl-, C₃ bis C₈ Cycloaliphatische-, C₆ bis C₁₀ Aryl- oder Imidreste oder C₃ bis C₆ Alkohole sind,
R¹¹ und R¹² sowie R¹³ und R¹⁴ jeweils zusammen heterozyklische Ringsysteme bilden, die aromatisch oder nicht-aromatisch sein können und unabhängig von einander sind, und wobei diese Ringsysteme weitere Heteroatome ausgewählt aus der Gruppe von Sauerstoff, Stickstoff und Schwefel oder funktionelle Gruppen ausgewählt aus der Gruppe von Acyl und Thioacyl enthalten können
als Edukt zur isocyanatfreien und isothiocyanatfreien Herstellung von Alkoxysilan-Polymeren, deren Alkoxysilangruppen über Carbamatgruppen, Thiocarbonatgruppen oder Thiocarbamatgruppen an das Polymer-Rückgrat gebunden sind,
wobei die wenigstens durchschnittlich 1.5 Carbonat-, Thiocarbonat-, Carbamat- oder Thiocarbamatgruppen unmittelbar über je ein Sauerstoffatom an das Polymer-Rückgrat gebunden sind, wobei dieses je eine Sauerstoffatom seinen Ursprung in der Umsetzung einer primären, sekundären oder tertiären Hydroxy-Gruppe des Polymer-Rückgrats und einer reaktiven Verbindung hat, die ausgewählt ist aus der Gruppe bestehend aus einem Diorganocarbonat, einem Diorganothiocarbonat, einem cyclischen Carbonat, einem cyclischen Thiocarbonat, einem N,N-Diheterocycloharnstoffderivat und einem N,N-Diheterocyclothioharnstoffderivat.

Vorzugsweise betrifft es insbesondere die Verwendung eines Präpolymers mit wenigstens durchschnittlich 1.5 Carbonatgruppen 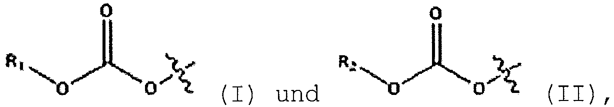 in denen R¹ und R² unabhängig voneinander lineare oder verzweigte C₁ bis C₆ Alkylreste (wie beispielsweise Methyl, Ethyl, Propyl), C₁ bis C₆ Acylreste, C₃ bis C₈ cycloaliphatische Reste (wie beispielsweise Cyclopentyl oder Cyclohexyl), C₆ bis C₁₀ Arlyreste (wie beispielsweise Phenyl) oder Imidreste (wie beispielsweise Succinimid oder Maleinimid) oder C₃ bis C₆ Alkohole (wie beispielsweise Propanol, Butanol oder 1,3-Propandiol) sind,
als Edukt zur isocyanatfreien und isothiocyanatfreien Herstellung von Alkoxysilan-Polymeren, deren Alkoxysilangruppen über Carbamatgruppen, Thiocarbonatgruppen oder Thiocarbonatgruppen an das Polymer-Rückgrat gebunden sind,
wobei die wenigstens durchschnittlich 1.5 Carbonatgruppen unmittelbar über je ein Sauerstoffatom an das Polymer-Rückgrat gebunden sind, und dieses je eine Sauerstoffatom seinen Ursprung in der Umesterungsreaktion einer Hydroxy-Gruppe des Polymer-Rückgrats und eines Diorganocarbonats oder eines cyclischen Carbonats hat.

Unter dem Ausdruck "durchschnittlich 1.5 Carbonatgruppen oder Carbamatgruppen" wird die Anzahl der Carbonatgruppen respektive der Carbamatgruppen verstanden, die nach Beendigung der Reaktion unmittelbar über je ein Sauerstoffatom an das Polymer-Rückgrat des erfindungsgemässen Präpolymers gebunden sind. Die Anzahl der Carbonatgruppen oder der Carbamatgruppen stimmt nicht vollständig mit der Anzahl der primären, sekundären oder tertiären Hydroxygruppen am Polymer-Rückgrat überein, da die Reaktion teilweise nicht vollständig abläuft, beispielsweise 1.5 Carbonatgruppen oder Carbamatgruppen auf 2 Hydroxygruppen. Die durchschnittliche Carbonat- oder Carbamatgruppenanzahl kann durch eine dem Fachmann bekannte Ermittlung von OH-Zahlen festgestellt werden. Vorzugsweise ist die durchschnittliche Anzahl der Carbonatgruppen oder der Carbamatgruppen wenigstens 1.7 Carbonatgruppen respektive Carbamatgruppen pro Präpolymer und besonders bevorzugt wengistens 1.8 Carbonatgruppen respektive Carbamatgruppen pro Präpolymer. Gleiches gilt für die Thiocarbonat- und die Thiocarbamatgruppen.

Es wurde festgestellt, dass die Verwendung des erfindungsgemässen Präpolymers eine isocyanatfreie und isothiocyanatfreie Herstellung von Alkoxysilan-Polymeren erlaubt. Gleichzeitig können die Eigenschaften dieser Polymere mit einer grossen Variabilität gezielt eingestellt werden. Das erfindungsgemässe Präpolymer stellt eine Art modulares "Baukasten-System" dar, welches es erlaubt, je nach gewünschten Eigenschaften ein bevorzugtes Polymer-Rückgrat für ein gewünschtes Alkoxysilan-Polymer auszuwählen.

Als mögliches Polymer-Rückgrat kommen eine Vielzahl von verschiedenen Polymerketten in Frage, die in grossen Mengen kostengünstig verfügbar sind. Die einzige Bedingung, die das Polymer-Rückgrat als Edukt für die nachfolgende Umsetzung zum erfindungsgemässen Präpolymer erfüllen muss, ist, dass wenigstens zwei Hydroxygruppen vorliegen müssen, die wahlweise primär, sekundär oder tertiär sein können.

Diese wenigstens zwei primären, sekundären oder tertiären Hydroxygruppen werden durch eine einfache Umesterung in wenigstens durchschnittlich 1.5 Carbonatgruppen überführt, welche die reaktiven Gruppen des Präpolymers darstellen. Das heisst, dass das Sauerstoffatom über welches die Carbonatgruppe an das Polymer-Rückgrat unmittelbar gebunden ist, seinen Ursprung in der Umesterungsreaktion einer Hydroxy-Gruppe des Polymer-Rückgrats und eines Diorganocarbonats oder eines cyclischen Carbonats hat. Die Herstellung des Präpolymers kann demnach aus einer polymeren Verbindung mit einem Polymer-Rückgrat, das wenigstens zwei primäre, sekundäre oder tertiäre Hydroxygruppen aufweist, durch Umsetzung mit einem Diorganocarbonat oder einem cyclischen Carbonat hergestellt werden. Die Herstellung dieser erfindungsgemässen Polymere ist kostengünstig und einfach zu bewerkstelligen.

Alternativ werden diese wenigstens zwei primären, sekundären oder tertiären Hydroxygruppen in wenigstens durchschnittlich 1.5 Carbamatgruppen überführt, welche die reaktiven Gruppen des Präpolymers darstellen. Das heisst, dass das Sauerstoffatom über welches die Carbamatgruppe an das Polymer-Rückgrat unmittelbar gebunden ist, seinen Ursprung in der Umsetzung einer Hydroxy-Gruppe des Polymer-Rückgrats und eines N,N-Diheterocycloharnstoffderivats hat. Die Herstellung des Präpolymers kann demnach auch aus einer polymeren Verbindung mit einem Polymer-Rückgrat, das wenigstens zwei primäre, sekundäre oder tertiäre Hydroxygruppen aufweist, durch Umsetzung mit einem N,N-Diheterocyclo-harnstoffderivat hergestellt werden. Gleiches gilt auch für Thiocarbamatgruppen. Diese erfindungsgemässen Präpolymere erlauben die Herstellung von Polymeren mit einer höheren Vernetzungsdichte. Ausserdem beschleunigen die bei der Umsetzung entstehenden heterozyklischen Ringsysteme die Reaktion.

Unter den Ausdrücken N,N-Diheterocycloharnstoffderivat und N,N-Diheterocyclothioharnstoffderivat werden in der vorliegenden Erfindung Verbindungen der allgemeinen Formel (A) und (B) verstanden, 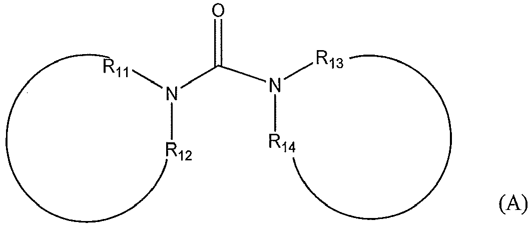 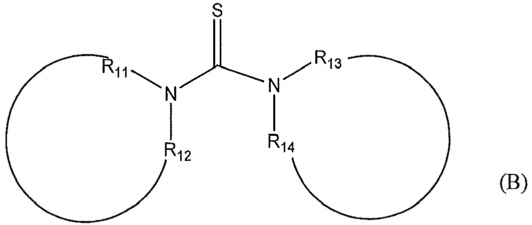 in denen R¹¹ und R¹² sowie R¹³ und R¹⁴ jeweils zusammen heterozyklische Ringsysteme bilden, die aromatisch oder nicht-aromatisch sein können und unabhängig voneinander sind, und wobei diese Ringsysteme nebst dem Stickstoffatom, das Bestandteil der Harnstoff- oder der Thioharnstoffverbindung ist, weitere Heteroatome ausgewählt aus der Gruppe von Sauerstoff, Stickstoff und Schwefel oder funktionelle Gruppen ausgewählt aus der Gruppe von Acyl und Thioacyl enthalten können. Die heterozyklischen Ringsysteme sind dabei vorzugsweise 5 bis 14 gliedrig und können monozyklisch oder bizyklisch sein. Die monozyklischen Ringsysteme sind vorzugsweise 5 bis 7 gliedrig und die bizyklischen Ringsysteme sind vorzugsweise 10 bis 12 gliedrig.

Vorzugsweise ist das N,N-Diheterocycloharnstoffderivat ausgewählt aus der Gruppe bestehend aus 1,1'-Carbonyldiimidazol (CDI), 1,1'-Carbonyldibenzimidazol, 1,1'-Carbonyldi(1,2,4)-triazol (CDT), 1,1'-Carbonylbis(2-methylimidazol), 1,1'-Carbonyldibenzotriazol und Carbonylbiscaprolactam (CBC) und besonders bevorzugt 1,1'-Carbonyldiimidazol (CDI).

Da sich die wenigstens zwei primären, sekundären oder tertiären Hydroxygruppen sowohl an den terminalen Enden des Polymer-Rückgrats, am Polymerrückgrat selbst oder einer Seitenkette befinden können, kann aus einem riesigen Pool von Ausgangsverbindungen ausgewählt werden.

Durch diese wenigstens durchschnittlich 1.5 Carbonat-, Thiocarbonat-, Carbamat- oder Thiocarbamatgruppen kann der Einsatz der hochtoxischen Isocyanat- und Isothiocyanatgruppen vermieden werden.

Ausserdem können als Polymer-Rückgrat auch oligomere oder polymere Naturrohstoffe oder nachwachsende oligomere oder polymere Rohstoffe verwendet werden, die wenigstens zwei primäre, sekundäre oder tertiäre Hydroxygruppen aufweisen oder so modifiziert werden, dass sie wenigstens zwei primäre, sekundäre oder tertiäre Hydroxygruppen aufweisen, was den Zugang zu beispielsweise Kleb- und Dichtstoffen oder Beschichtungen mit einem sehr hohen Anteil an nachwachsenden Rohstoffen eröffnet. Das erfindungsgemässe Präpolymer eröffnet damit die Möglichkeit, umweltfreundliche und toxikologisch unbedenkliche Kleb- und Dichtstoffe zur Verfügung zu stellen, was insbesondere für die Bauindustrie und für die Fahrzeugindustrie (Auto-, Flugzeug- und Schiffindustrie) von grossem Interesse ist.

Das erfindungsgemässe Präpolymer erlaubt es, auf einfache Art und Weise sowohl die Eigenschaften der unvernetzten Polymere (wie beispielsweise Schmelzpunkt, Viskosität, Löslichkeit) als auch die Eigenschaften der fertig vernetzten Massen (wie beispielsweise Härte, Elastizität, Zugfestigkeit, Reissdehnung, chemische Beständigkeit, thermische Beständigkeit und photolytische Beständigkeit) nahezu beliebig einzustellen. Besonders bevorzugt ist das erfindungsgemässe Präpolymer aufgrund der besseren Verarbeitbarkeit bei Raumtemperatur flüssig.

Die Kettenlänge und damit das Molekulargewicht des Präpolymers hat einen grossen Einfluss auf die Eigenschaften des Präpolymers. Vorzugsweise hat das Präpolymer ein mittleres Molekulargewicht Mw von 100 bis 200'000 g/mol, vorzugsweise von 5000-50'000 g/mol. Das mittlere Molekulargewicht Mw wird dabei mittels Gelpermeations-Chromatographie bestimmt (Tetrahydrofuran als Eluent nach DIN 55672-1:2016-03 gegen Polystyrol-Standard).

Unter dem Begriff "Silylgruppe" sind im Zusammenhang mit der vorliegenden Erfindung jedwelche (Organo-) Silylgruppen, insbesondere auch substituierte Silylgruppen und Silyloxygruppen zu verstehen, wie weiter unten ausgeführt wird.

Der Begriff "Aminogruppe", wie er im Kontext der vorliegenden Erfindung verwendet wird, schliesst dabei sowohl primäre als auch sekundäre Aminogruppen mit ein. Sie können linear, cyclisch oder aromatisch vorliegen.

Vorzugsweise ist das Polymer-Rückgrat [A] des erfindungsgemässen Präpolymers linear oder verzweigt und ist ausgewählt aus der Gruppe bestehend aus
- Polyethern (wie beispielsweise Polyvinylalkohol, Polyethylenglykol und Polypropylenglykol),
- Polyolefinen (wie beispielsweise Polyethylen, Polypropylen, Polybutadien, Polystyrol, Polyacrylnitrilbutadien und Polyvinylchlorid),
- Polyestern wie beispielsweise Polybutylenterephthalat, Polyethylenterephthalat Polyethylennaphthalat, Polybutylenterephthalat, Polyethylenterephthalat und Polycaprolacton),
- Polycarbonaten (wie beispielsweise Polyethylencarbonat, Polypropylencarbonat, Polybutylencarbonat oder Polyvinylencarbonat),
- Polyacrylaten (wie beispielsweise Polymethylacrylat oder Polybutylacrylat)
- Polysulfiden (wie beispielsweise Polyphenylensulfid und Polyethylensulfid)
- Polysiloxane (wie beispielsweise Polydimethylsiloxan oder Polydiphenylsiloxane)
- Polyacetalen (wie beispielsweise Polyoxymethylen) und Copolymeren davon.

Präpolymere mit Polycarbonat- oder Polyester-Rückgraten oder deren Mischungen werden beispielsweise eingesetzt, wenn eine hohe Zugfestigkeit erforderlich ist. Dagegen weisen Präpolymere mit Polysulfid- oder Polyacrylnitrilbutadien-Rückgraten eine ausgezeichnete chemische Beständigkeit auf und Präpolymere mit Polyacrylat-, Polybutadien-, Polysiloxan- und Polyolefin-Rückgraten werden vorzugsweise eingesetzt, wenn ein Bedarf für eine hohe photolytische Beständigkeit vorhanden ist.

Sofern das Polymer-Rückgrat keine OH-Gruppen aufweist, wird es mit Hydroxygruppen funktionalisiert, um die nachfolgende Umsetzung zu ermöglichen. Eine solche Funktionalisierung ist vorzugsweise terminal, das heisst an den beiden Enden des Polymer-Rückgrats und/oder gegebenenfalls an den Enden der Seitenketten, falls das Polymer-Rückgrat verzweigt ist. Beispielsweise kann ein Polyester-Rückgrat durch di- oder polyfunktionelle Alkohole zu Polyesterpolyolen funktionalisiert werden, deren Alkoholgruppen nachfolgend umgeestert werden können. Gleiches gilt beispielsweise auch für Polyolefinpolyole. Solche Modifizierungen sind dem Fachmann bekannt. Auch ein Polymer-Rückgrat, das primäre, sekundäre oder tertiäre Hydroxygruppen aufweist, kann endständig mit di- oder polyfunktionellen Gruppen funktionalisiert werden, um beispielsweise die Kettenlänge zu verlängern oder die Eigenschaften zu modifizieren. Mittels einer Verlängerung der Kettenlänge kann beispielsweise gezielt die Viskosität erhöht werden. Durch eine Funktionalisierung eines Polymer-Rückgrats mit sekundären Hydroxygruppen durch primäre Hydroxygruppen kann die Reaktivität des Polymer-Rückgrats erhöht werden. Dies kann beispielsweise durchgeführt werden, indem reine Polyoxypropylenpolyole nach Abschluss der Polypropoxylierungsreaktion mit Ethylenoxid weiter alkoxyliert werden, was zu Ethylenoxid terminierten (EO-endcapped)Polyoxypropylenpolyolen führt.

Vorzugsweise sind am erfindungsgemässen Präpolymer die wenigstens durchschnittlich 1.5 Carbonat- oder Thiocarbonatgruppen an den terminalen Enden des Polymer-Rückgrats angeordnet. Solche erfindungsgemässe Präpolymere sind nachfolgend mit den allgemeinen Formeln III und IIIa abgebildet: 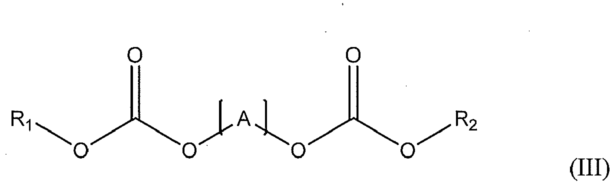 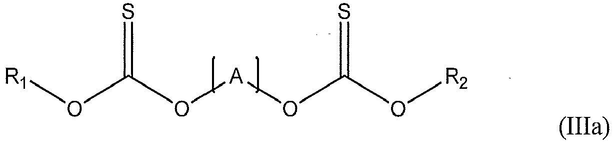 wobei R₁ und R₂ die gleiche Bedeutung wie oben haben. [A] steht für ein oben bereits erwähntes lineares oder verzweigtes Polymer-Rückgrat.

Vorzugsweise sind die Reste R¹ und R² der wenigstens durchschnittlich 1.5 Carbonat- oder Thiocarbonatgruppen beide gleich, besonders bevorzugt ausgewählt aus der Gruppe bestehend aus Methyl, Ethyl, Phenyl, Succinimid, Maleinimid, Propanol, Butanol und 1,3-Propandiol, insbesondere Methyl und Phenyl. Die sich bei der Umesterung und insbesondere bei der nachfolgenden Polymerisation bildenden Alkohole, insbesondere Methanol, Phenol und Ethanol lassen sich einfach und schnell mittels Destillation entfernen. Diese bevorzugten Reste R¹ und R² erlauben eine nachfolgende Umsetzung mit toxikologisch unbedenklichen Silanen. Ausserdem kann die Umsetzung ohne Platinkatalysatoren durchgeführt werden.

Die bevorzugt terminal angeordneten Carbonatgruppen können in einem weiteren Schritt zu einem Carbamat oder Thiocarbamat umgesetzt werden.

Vorzugsweise sind am erfindungsgemässen Präpolymer die wenigstens durchschnittlich 1.5 Carbamat- oder Thiocarbamatgruppen an den terminalen Enden des Polymer-Rückgrats angeordnet. Solche erfindungsgemässe Präpolymere sind nachfolgend mit den allgemeinen Formeln XIII und XIIIa abgebildet: 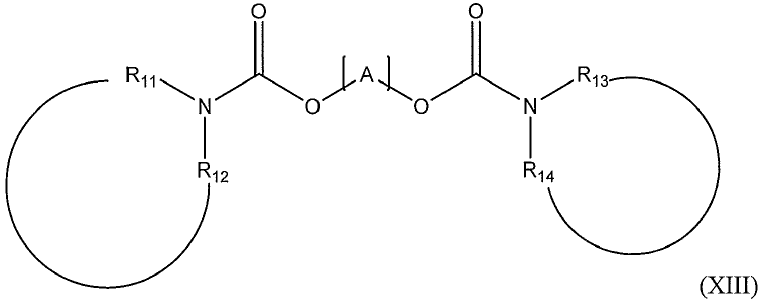 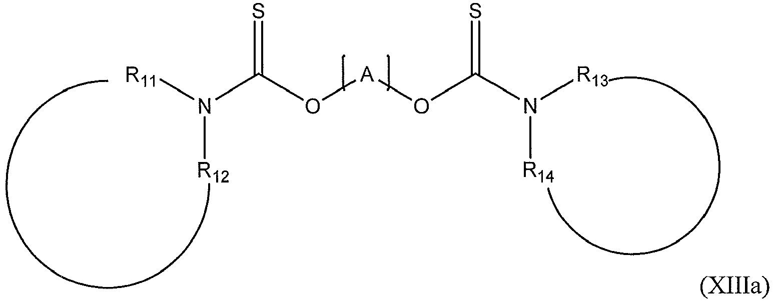 wobei R₁₁, R₁₂, R₁₃ und R₁₄ die gleiche Bedeutung wie oben haben. [A] steht für ein oben bereits erwähntes lineares oder verzweigtes Polymer-Rückgrat.

Vorzugsweise sind die durch die Reste R₁₁ und R₁₂ sowie R₁₃ und R₁₄ gebildeten heterozyklische Ringsysteme der wenigstens durchschnittlich 1.5 Carbamat- und Thiocarbamatgruppen beide gleich.

In einer Ausführungsform der vorliegenden Erfindung weist das erfindungsgemässe Präpolymer genau zwei Carbonat-, Thiocarbonat-, Carbamat- oder Thiocarbamatgruppen auf. Besonders bevorzugt sind diese terminal angeordnet.

Wenn das Polymer-Rückgrat mehr als zwei primäre, sekundäre oder tertiäre Hydroxygruppen aufweist, kann die Anzahl der Carbonat-, Thiocarbonat-, Carbamat- oder Thiocarbamatgruppen entsprechend höher liegen. Dabei ist es abhängig von den finalen Eigenschaften des Polymers denkbar, dass nur ein Teil oder sämtliche Hydroxygruppen umgesetzt werden. Wenn beispielsweise ein Polymer mit einer hohen Zugfestigkeit, einer hohen Härte und einer tiefen Elastizität hergestellt werden soll, weist das erfindungsgemässe Polymer-Rückgrat eine Vielzahl von Carbonat-, Thiocarbonat-, Carbamat- oder Thiocarbamatgruppen auf, so dass eine dichtere Vernetzung stattfinden kann.

Vorzugsweise liegt die gemittelte Anzahl Carbonat-, Thiocarbonat-, Carbamat- oder Thiocarbamatgruppen pro Präpolymer in einem Bereich von 1.5 bis 20, vorzugsweise von 1.7 bis 10. Bei einem linearen Polymer-Rückgrat liegt die Anzahl zwischen 1.5 bis 2, bei einem verzweigten Polymer-Rückgrat in der Regel höher.

In einer Ausführungsform ist wenigstens ein Teil des Polymer-Rückgrats linear und vorzugsweise ist das ganze Polymer-Rückgrat linear, insbesondere wenn das finale, vernetzte Polymer eine geringe Härte und eine hohe Elastizität aufweisen soll. Wenn das erfindungsgemässe Präpolymer linear ist, hat es vorzugsweise ein mittleres Molekulargewicht von 1'000-100'000g/Mol, besonders bevorzugt 5'000-50'000g/mol. Unter dem Begriff «linear» wird in der vorliegenden Erfindung ein Makromolekül verstanden, dessen Hauptkette unverzweigt ist, wobei einzelne Wasserstoffatome der Hauptkette durch funktionelle Gruppen wie beispielsweise OH oder Carboxylgruppen oder durch kurze Alkylreste wie beispielsweise Methyl, Ethyl, Propyl, iso-Propyl oder Phenyl ersetzt sein können.

In einer alternativen Ausführungsform kann wenigstens ein Teil des Polymer-Rückgrats verzweigt sein. Das bedeutet, dass die Hauptkette des Makromoleküls über eine oder mehrere Verzweigungen (Seitenketten) verfügt, welche wiederum optional eine oder mehrere Ether-, Ester-, Carbonat-, Acrylat- oder Sulfidgruppen enthalten können und optional eine vorzugsweise terminale Gruppe der Formeln (IV) oder (XIV) 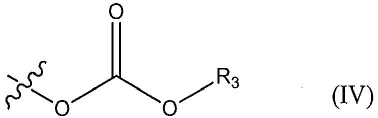 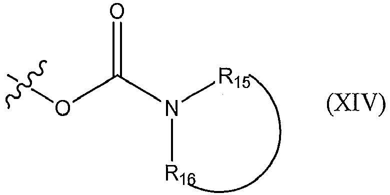 aufweisen können, wobei R³ die gleiche Definition hat wie R¹ und R², und R¹⁵ und R¹⁶ jeweils zusammen ein heterozyklisches Ringsystem bilden, das die gleiche Definition hat wie die heterozyklischen Ringsysteme, die aus R¹¹ und R¹², respektive aus R¹³ und R¹⁴ gebildet sind. Vorzugsweise weist ein solches Präpolymer neben zwei an den beiden Enden der Hauptkette angeordneten terminalen Carbonat-, Thiocarbonat-, Carbamat- oder Thiocarbamatgruppen noch zusätzlich x weitere Carbonat-, Thiocarbonat-, Carbamat- oder Thiocarbamatgruppen auf, wobei x die Anzahl der Verzweigungen des Polymer-Rückgrats darstellt. Je höher der Verzweigungsgrad des Polymer-Rückgrats ist, desto härter ist das finale, vernetzte Polymer. Dieser Effekt kann zusätzlich verstärkt werden, wenn die Kettenlänge der Verzweigungen kurz ist. Wenn das erfindungsgemässe Präpolymer verzweigt ist, hat es vorzugsweise ein mittleres Molekulargewicht von 1000-100000g/mol, besonders bevorzugt 5000-50000 g/mol. In einer Ausführungsform weist jede Verzweigung eine terminale Gruppe der Formel IV oder XIV auf.

Vorzugsweise ist das Polymer-Rückgrat ausgewählt aus der Gruppe eines Polyethers, Polyesters, Polycarbonats, Polysulfids, Polysiloxans, Polyacrylats und Copolymeren davon. Besonders bevorzugt weisen diese an jedem Ende, und sofern vorhanden, an jeder Verzweigung terminal eine primäre, sekundäre oder tertiäre Hydroxygruppen auf.

Besonders bevorzugt enthält das Polymer-Rückgrat einen Polyether, da dieser ohne weiteren Funktionalisierungsschritt direkt weiterverarbeitet werden kann. Mögliche Polyether sind dabei Polyethylenglycol oder Polypropylenglycol, aber auch Umsetzungsprodukte niedermolekularer polyfunktioneller Alkohole mit Alkylenoxiden. Polypropylenglycol ist dabei besonders bevorzugt und kann entweder linear vorliegen oder mehrarmig sein.

Die Alkylenoxide weisen vorzugsweise 2 bis 4 C-Atome auf. Geeignet sind beispielsweise die Umsetzungsprodukte von Ethylenglykol, Propylenglykol, den isomeren Butandiolen, den isomeren Hexandiolen oder 4,4'-Dihydroxydiphenylpropan mit Ethylenoxid, Propylenoxid oder Butylenoxid, oder Gemischen aus zwei oder mehr davon. Ferner sind auch die Umsetzungsprodukte polyfunktioneller Alkohole, wie Glycerin, Trimethylolethan oder Trimethylolpropan, Pentaerythrit oder Zuckeralkohole, oder Gemischen aus zwei oder mehr davon, mit den genannten Alkylenoxiden zu Polyetherpolyolen geeignet. Weitere Polyether-Rückgrate sind durch Kondensation von z.B. Glycerin oder Pentaerythrit unter Wasserabspaltung herstellbar. Die Herstellung solcher Polyether ist dem Fachmann bekannt und beispielsweise in DE 10259248 A1 detailliert beschrieben.

Weitere, im Rahmen der Erfindung gebräuchliche Polyether-Rückgrate können durch Polymerisation von Tetrahydrofuran (Poly-THF) gewonnen werden.

Geeignete Polymer-Rückgrate sind zudem Polyether, die durch Vinylpolymere modifiziert wurden. Derartige Produkte sind beispielsweise erhältlich, in dem Styrol- oder Acrylnitril, oder deren Gemisch, in Gegenwart von einem Polyol polymerisiert werden.

Geeignet sind als Polymer-Rücken auch Polyesterpolyole, die durch Umsetzung von niedermolekularen Alkoholen, insbesondere von Ethylenglykol, Diethylenglykol, Propandiol, Dipropylenglykol, Neopentylglykol, Hexandiol, Butandiol, Pentandiol, Hexandiol, Propylenglykol, Glycerin oder Trimethylolpropan mit Caprolacton entstehen.

Weitere geeignete Polyesterpolyole sind bevorzugt durch Polykondensation herstellbar. Derartige Polyesterpolyole umfassen bevorzugt die Umsetzungsprodukte von polyfunktionellen, vorzugsweise difunktionellen Alkoholen (gegebenenfalls zusammen mit geringen Mengen an trifunktionellen Alkoholen) und polyfunktionellen, vorzugsweise difunktionellen und/oder trifunktionellen Carbonsäuren oder Carbonsäureanhydriden.

Anstatt freier Polycarbonsäuren können auch die entsprechenden Polycarbonsäureanhydride oder entsprechende Polycarbonsäureester mit Alkoholen mit vorzugsweise 1 bis 3 C-Atomen eingesetzt werden. Zur Herstellung derartiger Polyesterpolyole geeignet sind insbesondere Hexandiol, 1,4-Hydroxymethylcyclohexan, 2-Methyl-1,3-propandiol, Butantriol-1,2,4-triethylenglykol, Tetraethylenglykol, Ethylenglykol, Polyethylenglykol, Dipropylenglykol, Polypropylenglykol, Dibutylenglykol und Polybutylenglykol. Die Polycarbonsäuren können aliphatisch, cycloaliphatisch, aromatisch oder heterocyclisch oder beides sein. Sie können gegebenenfalls substituiert sein, beispielsweise durch Alkylgruppen, Alkenylgruppen, Ethergruppen oder Halogene. Als Polycarbonsäuren sind beispielsweise Bernsteinsäure, Adipinsäure, Korksäure, Azelainsäure, Sebacinsäure, Phthalsäure, Isophthalsäure, Terephthalsäure, Trimellitsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, Dimerfettsäure oder Trimerfettsäure oder Gemische aus zwei oder mehr davon geeignet. Gegebenenfalls können untergeordnete Mengen an monofunktionellen Fettsäuren im Reaktionsgemisch vorhanden sein. Als Tricarbonsäuren sind bevorzugt Zitronensäure oder Trimellitsäure geeignet. Die genannten Säuren können einzeln oder als Gemische aus zwei oder mehr davon eingesetzt werden.

Weitere geeignete Polymer-Rückgrate sind Polyester und insbesondere Polyesterpolyole aus mindestens einer der genannten Dicarbonsäuren und Glycerin, welche einen Restgehalt an OH-Gruppen aufweisen. Dieser Restgehalt sollte wenigstens zwei Hydroxygruppen umfassen. Aus Lactonen, beispielsweise auf Basis von ε-Caprolacton, auch "Polycaprolactone" genannt, oder Hydroxycarbonsäuren, beispielsweise ω-Hydroxycapronsäure, erhältliche Polyester, können ebenfalls eingesetzt werden. Es können aber auch Polyesterpolyole oleochemischer Herkunft verwendet werden. Derartige Polyesterpolyole können beispielsweise durch vollständige Ringöffnung von epoxidierten Triglyceriden eines wenigstens teilweise olefinisch ungesättigte Fettsäure enthaltenden Fettgemisches mit einem oder mehreren Alkoholen mit 1 bis 12 C-Atomen und anschliessender partieller Umesterung der Triglycerid-Derivate zu Alkylesterpolyolen mit 1 bis 12 C-Atomen im Alkylrest hergestellt werden. Weitere geeignete Polyole sind Polycarbonat-Polyole und Dimerdiole sowie Rizinusöl und dessen Derivate.

Ebenfalls als Polymer-Rückgrat geeignet sind Polyacetale. Unter Polyacetalen werden Verbindungen verstanden, wie sie aus Glykolen, beispielsweise Diethylenglykol oder Hexandiol oder deren Gemisch mit Formaldehyd erhältlich sind. Im Rahmen der Erfindung einsetzbare Polyacetale können ebenfalls durch die Polymerisation cyclischer Acetale erhalten werden.

Weiterhin als Polymer-Rückgrat geeignet sind Polycarbonate. Polycarbonate können beispielsweise durch die Reaktion von Diolen, wie Propylenglykol, 1,4-Butandiol oder 1,6-Hexandiol, Diethylenglykol, Triethylenglykol oder Tetraethylenglykol oder Gemischen aus zwei oder mehr davon mit Diarylcarbonaten, beispielsweise Diphenylcarbonat, oder Phosgen, erhalten werden.

Für das Polymer-Rückgrat sind auch Polyole aus pflanzlichen oder tierischen Quellen geeignet. Da diese meistens kurzkettig sind, können diese zuerst zum Beispiel über eine Carbonatbindung verlängert werden. Dies führt zu einem naturstoffbasierten Polycarbonat mit endständigen Hydroxygruppen.

Ebenfalls als Polymer-Rücken geeignet sind Polyacrylate, insbesondere solche, die noch zusätzliche OH-Gruppen aufweisen. Solche Polyacrylate sind beispielsweise erhältlich durch die Polymerisation von ethylenisch ungesättigten Monomeren, die eine OH-Gruppe tragen. Solche Monomeren sind beispielsweise durch die Umesterung von ethylenisch ungesättigten Carbonsäuren und difunktionellen Alkoholen, wobei der Alkohol in der Regel in einem leichten Überschuss vorliegt, erhältlich. Hierzu geeignete ethylenisch ungesättigte Carbonsäuren sind beispielsweise Acrylsäure, Methacrylsäure, Crotonsäure oder Maleinsäure. Entsprechende OH-Gruppen tragende Ester sind beispielsweise 2-Hydroxyethylacrylat, 2-Hydroxyethylmethacrylat, 2-Hydroxypropylacrylat, 2-Hydroxypropylacrylat, 2-Hydroxypropylmethacrylat, 3-Hydroxypropylacrylat oder 3-Hydroxypropylmethacrylat oder Gemische aus zwei oder mehr davon.

Geeignete Polymer-Rückgrate sind ausserdem polyhydroxyfunktionelle Acrylnitril/Butadien-Copolymere, wie sie beispielsweise aus Epoxiden oder Aminoalkoholen und carboxylterminierten Acrylnitril/Butadien-Copolymeren, welche kommerziell erhältlich sind unter dem Namen Hypro® CTBN von der Firma Emerald Performance Materials, LLC, USA, hergestellt werden können.

Geeignete Polymer-Rückgrate sind auch Copolymere, die über eine Carbonatgruppe miteinander verbunden werden, in dem zwei oder mehrere Polymerketten mit einem Diorganocarbonat umgesetzt werden. Die dazu verwendeten Polymerketten können gleich oder verschieden sein. Beispielsweise können verschiedene kurzkettige Naturstoffpolyole über Carbonatgruppen miteinander verbunden und die Länge des Polymer-Rückgrads kann über die Anzahl der Naturstoffpolyole festgelegt werden. Ein mögliches Beispiel ist in Formel (V) abgebildet, wobei [A1] und [A2] beispielsweise zwei verschiedene oder zwei gleiche Naturstoffpolyole sein können.

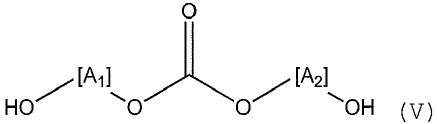

Weitere Polymer-Rückgrate aus Copolymeren können carbonatterminierte Polymerketten sein, die über ein Diamin verknüpft werden, so dass die Kettenlänge entsprechend erhöht werden kann. Ein mögliches Beispiel ist in Formel (Va) abgebildet, wobei [A1] und [A3] beispielsweise zwei verschiedene oder zwei gleiche Naturstoffpolyole sein können, die terminal ein Carbonat aufweisen, das mit einem Diamin mit der Polymerkette [A2] verknüpft wurde.

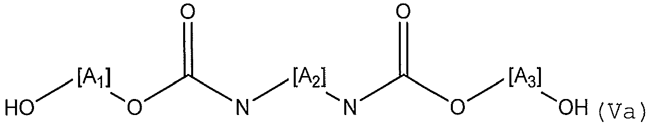

Besonders geeignete Polymer-Rückgrate sind überdies in der europäischen Patentanmeldung EP 2 930 197 enthalten, deren Inhalt, insbesondere der Abschnitte 45-57 hiermit über Bezugnahme in die vorliegende Beschreibung aufgenommen wird.

Zur Herstellung eines erfindungsgemässen Präpolymers wird an die wenigstens zwei primäre, sekundäre oder tertiäre Hydroxygruppen des Polymer-Rückens je reaktiven Verbindung gebunden, die ausgewählt ist aus der Gruppe bestehend aus einem Diorganocarbonat, einem Diorganothiocarbonat, einem cyclischen Carbonat, einem cyclischen Thiocarbonat, einem N,N-Diheterocycloharnstoffderivat und einem N,N-Diheterocyclothioharnstoffderivat.

Beim Diorganocarbonat kann der Fachmann grundsätzlich jedes bekannte symmetrische oder unsymmetrische Diorganocarbonat einsetzen, wobei symmetrische Diorganocarbonat aufgrund der besseren Reaktionskontrolle bevorzugt sind. Bevorzugt ist als Diorganocarbonat ein Dialkylcarbonat oder ein Diarylcarbonat, insbesondere Dimethylcarbonat, Diethylcarbonat, Dipropylcarbonat, Dibutylcarbonat, Methylethylcarbonat, Diphenylcarbonat, N-N'-Disuccinimidylcarbonat, Allylsuccinimidylcarbonat, Methylsuccinimidylcarbonat, ethylsuccinimidylcarbonat, Phenylallylcarbonat, Methylphenylcarbonat, Phenylsuccinimidylcarbonat oder eine Mischung dieser Diorganocarbonat und besonders bevorzugt ein Dimethylcarbonat oder ein Diphenylcarbonat. Das Diorganocarbonat wird, bezogen auf die Hydroxygruppen, in einem Verhältnis von 1:1 bis 5:1 eingesetzt. Beim cyclischen Carbonat kann der Fachmann grundsätzlich jedes bekannte cyclische Carbonat einsetzen. Bevorzugt sind die cyclischen Carbonate ausgewählt aus der Gruppe von Propylencarbonat, Butylencarbonat, Glycerincarbonat und Vinylencarbonat.

Beispielsweise kann das Präpolymer gemäss der allgemeinen Formel IIIb wie folgt erhalten werden: 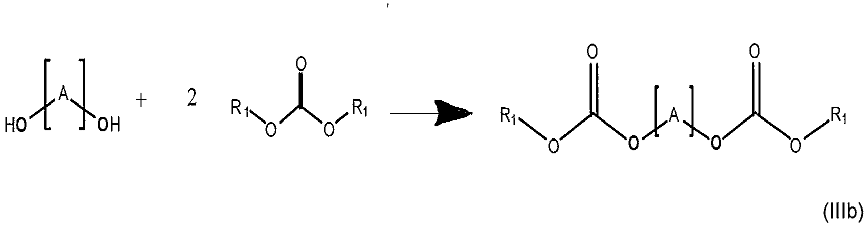 wobei [A] und R₁ die gleiche Bedeutung wie oben haben.

In dem obigen Reaktionsschema ist gut ersichtlich, dass die wenigstens durchschnittlich 1.5 Carbonatgruppen unmittelbar über je ein Sauerstoffatom an das Polymer-Rückgrat gebunden sind. Dieses je eine Sauerstoffatom hat damit seinen Ursprung in der Umesterungsreaktion einer primären, sekundären oder tertiären Hydroxy-Gruppe des Polymer-Rückgrats und eines Diorganocarbonats oder eines cyclischen Carbonats.

Alternativ kann das Präpolymer gemäss der allgemeinen Formel XIIIb wie folgt erhalten werden: 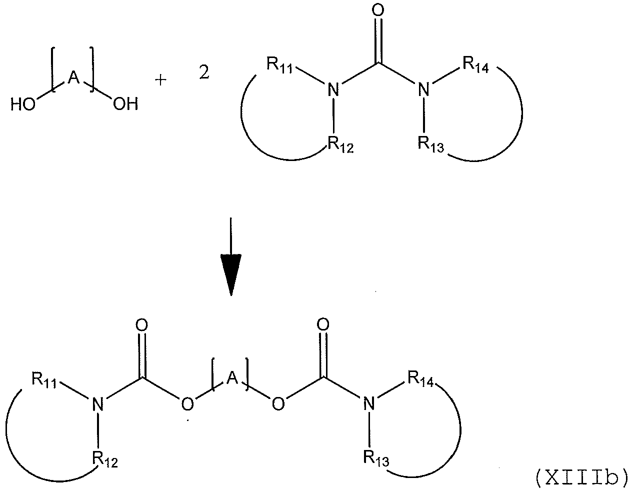 wobei [A] und R¹¹, R¹², R¹³ und R¹⁴ die gleiche Bedeutung wie oben haben.

Die Umsetzung mit den wenigstens zwei primären, sekundären oder tertiären Hydroxygruppen des Polymer-Rückgrats kann durch einen Katalysator beschleunigt werden. Beim Katalysator kann es sich um heterogene oder homogene Katalysatoren handeln, wie beispielsweise MCM-41 (Mobil Composition of Matter No. 41; ein mesoporöses Material mit hierarchischer Porenstruktur aus einer Familie von silikatischen und alumosilikatischen Feststoffen), organisch modifizierter MCM-41, Mg/La Metalloxide, nanokristallines MgO, LiOH, Li₂CO₃, K₂CO₃, Cs₂CO₃, Mg₅(OH)₂(CO₃)₄, Zirconium(IV)butoxid, Zirkonium(IV)propoxid, Zirkonium(IV)tert-butoxid, Zirconium(IV)isopropoxid, Titantetraalkoholat, Dibutylzinndilaurat, Dibutylzinnoxid, Bistributylzinnoxid, Yttrium(III)acetylacetonat, Zircon(III)acetylacetonat, Ytterbium(III)acetylacetonat, 1,8-Diazabicyclo[5.4.0]undec-7-en (DBU), 1,5-Diazobicyclo[4.3.0]non-5-en (DBN), Triflate wie beispielsweise Bismuth(III)triflat, Lanthanum(III)triflat, Ytterbium(III)triflat, Yttrium(III)triflat, Zirconyl triflat 1,5,7-triazabicyclo[4.4.0]dec-5-en (TBD), Pyridin, 4-(Dimethylamino)-pyridin, 1,4-Diazabicyclo[2.2.2]octan, ein Trimethylsilylamide wie beispielsweise Lithium-bis(trimethylsilyl)amid, ZrCl₂, SnCl₂ oder N-Heterocyclische Carbene wie beispielsweise 1,3-Bis(2,4,6-trimethylphenyl)imidazol-2-yliden. Weitere mögliche Katalysatoren für die Umesterung sind in der europäischen Patentanmeldung EP 2 308 914, insbesondere in den Absätzen 40 bis 42 beschrieben, und werden hiermit über Bezugnahme in den Anmeldetext aufgenommen. Aufgrund der hohen Reaktivität der heterozyklischen Ringsysteme wird diese Umsetzung vorzugsweise ohne Katalysator durchgeführt.

Die Umsetzung findet vorzugsweise bei -20 bis 200°C statt, bevorzugt bei 20 bis 120°C.

Vorzugsweise ist das erfindungsgemässe Präpolymer ausgewählt aus der Gruppe bestehend aus 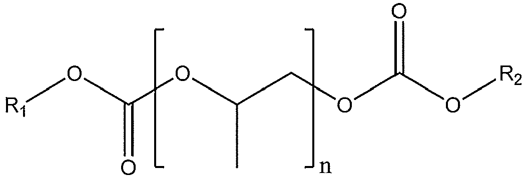 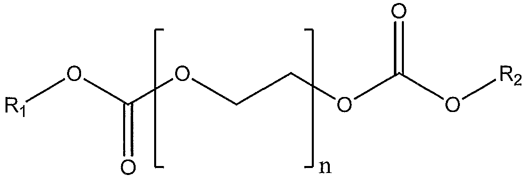 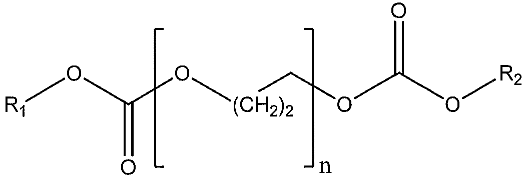 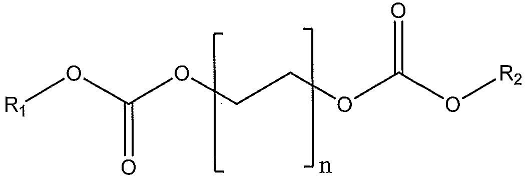 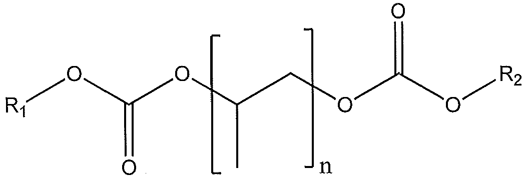 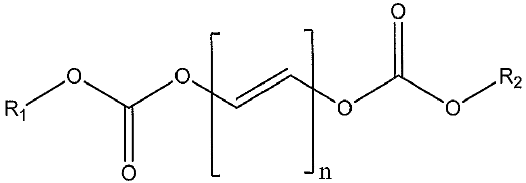 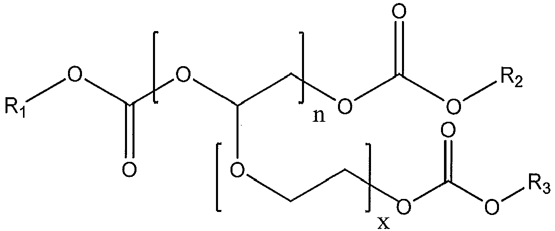 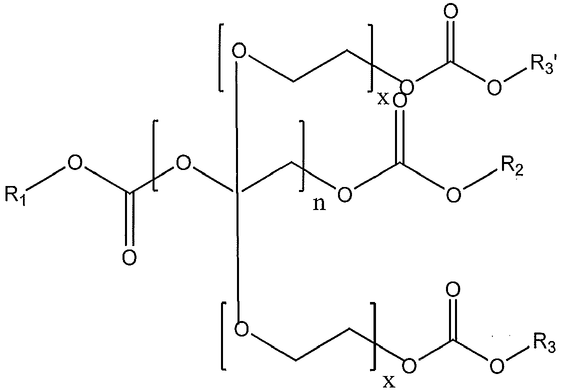 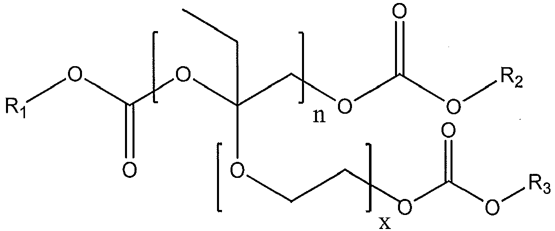 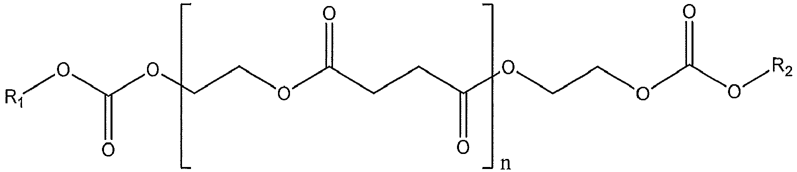 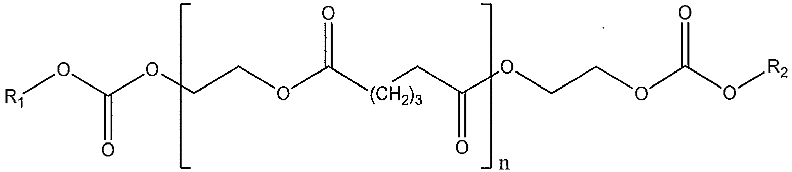 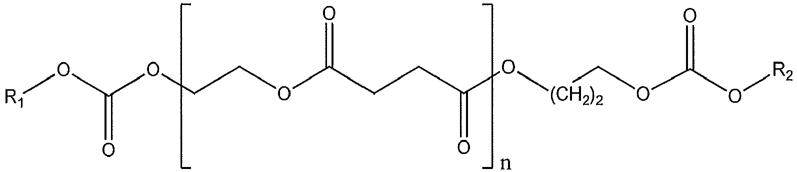 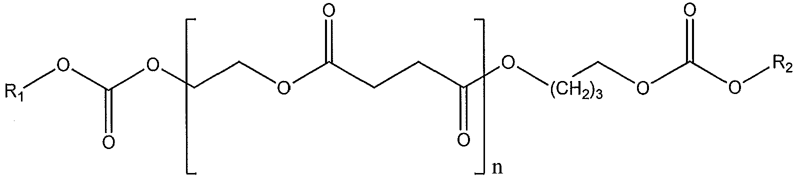 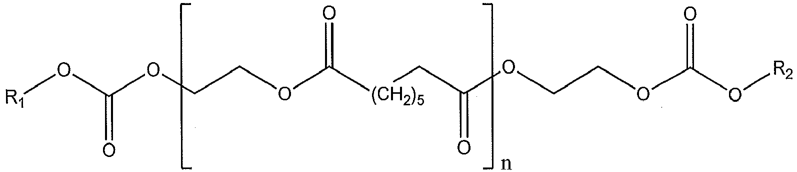 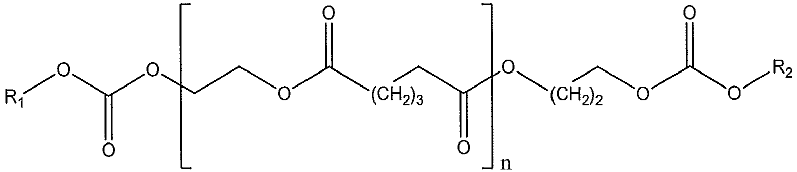 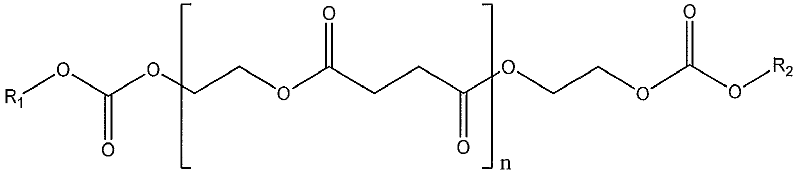 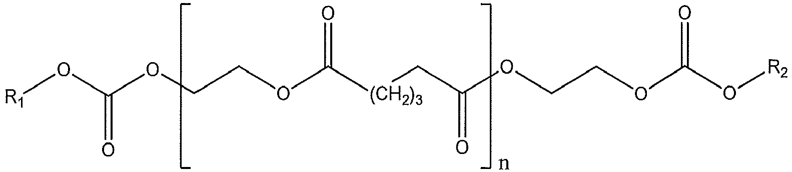 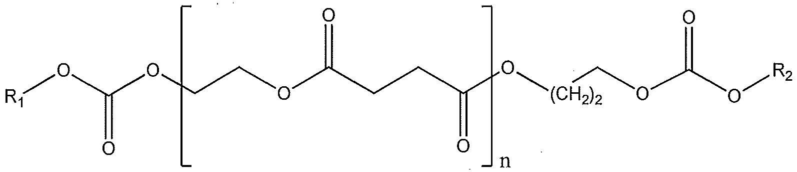 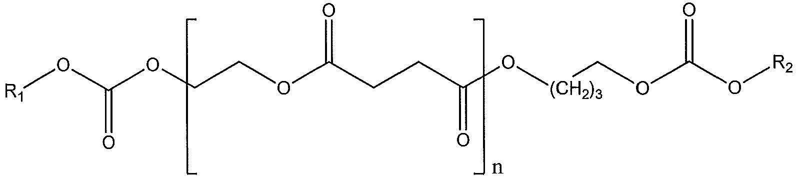 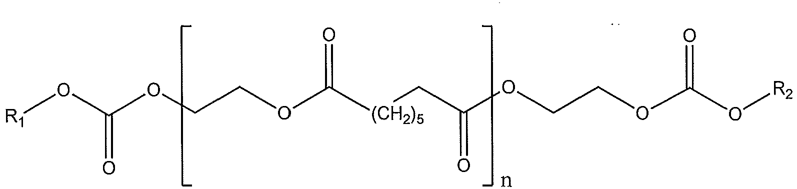 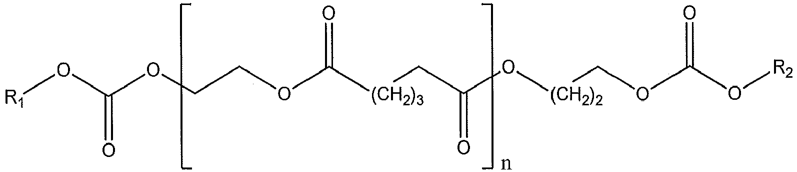 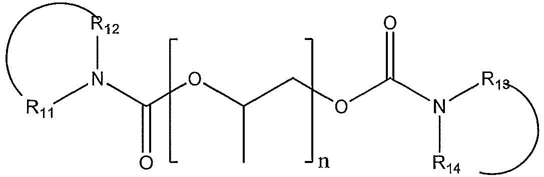 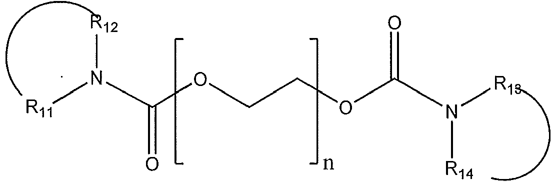 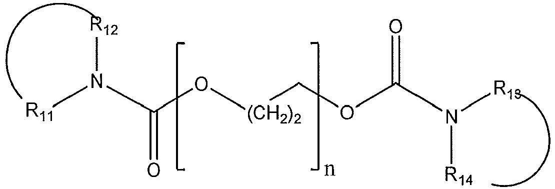 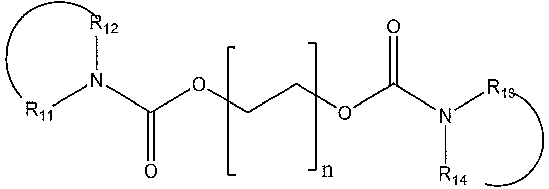 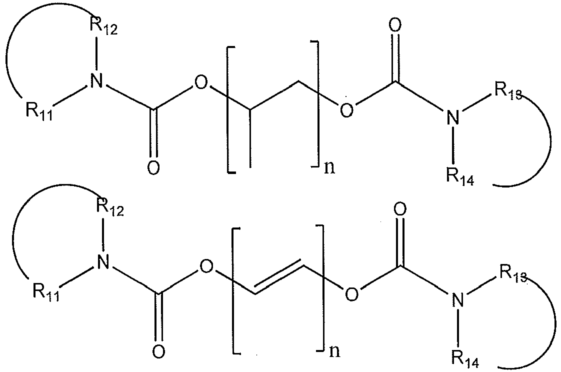 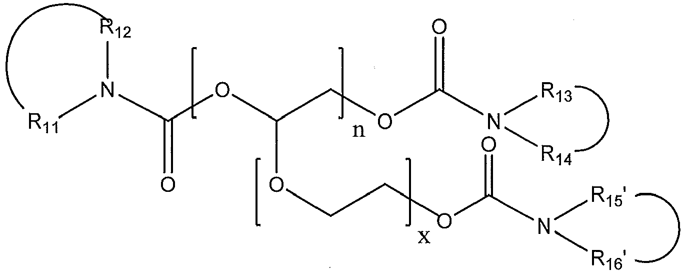 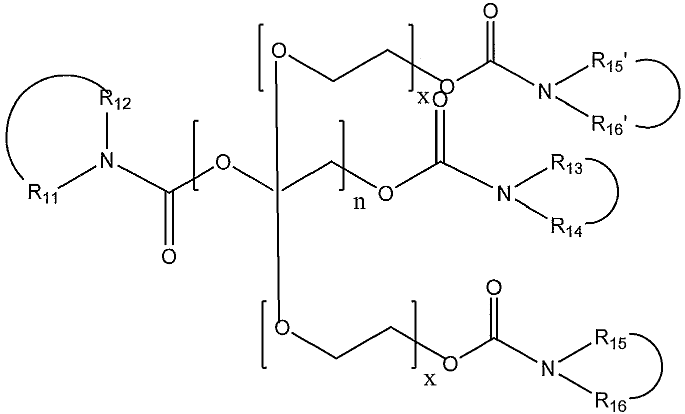 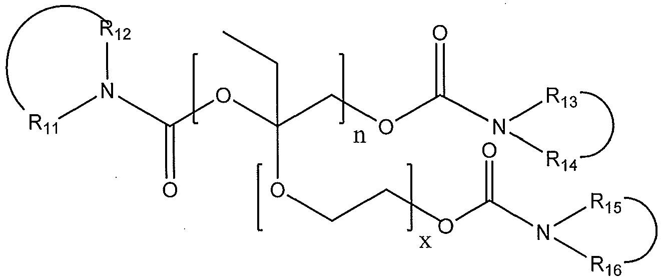 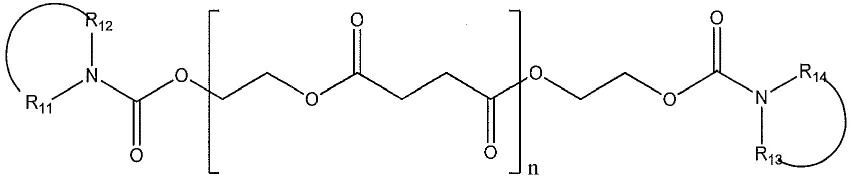 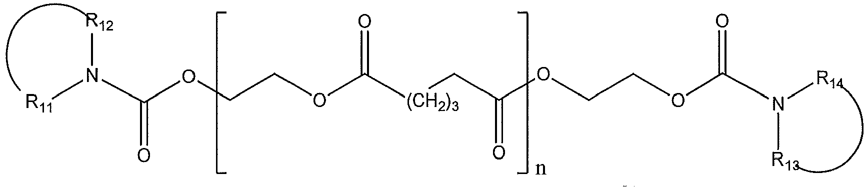 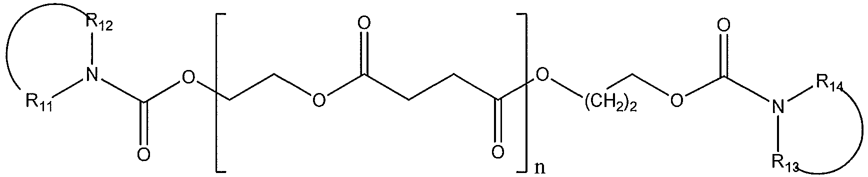 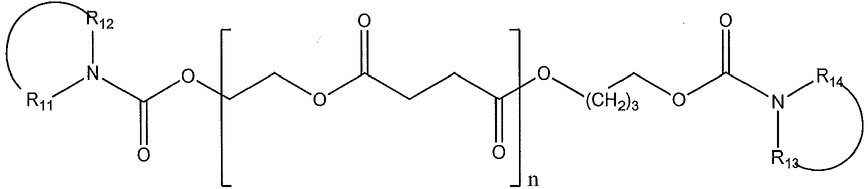 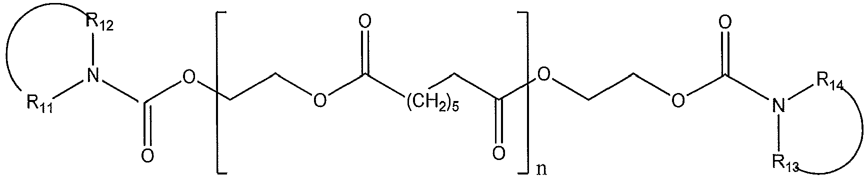 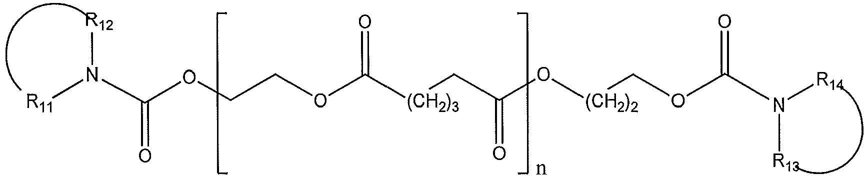 in denen
- n die Anzahl der Monomereinheiten darstellt und das Molekulargewicht zwischen 1000 und 100'000 g/mol, vorzugsweise zwischen 5'000 und 50'000 g/mol ist und damit die Anzahl n der Monomereinheiten definiert;
- R¹, R², R³ und R^{3'} sind unabhängig voneinander lineare oder verzweigte C₁ bis C₆ Alkyl-, C₁ bis C₆ Acyl-, C₃ bis C₈ Cycloaliphatische-, C₆ bis C₁₀ Aryl oder Imidreste. Vorzugsweise sind sämtliche Reste R¹, R², R³ und R^{3'} gleich, besonders bevorzugt Methyl, Ethyl oder Phenyl und insbesondere bevorzugt Methyl und
- R¹¹ und R¹², R¹³ und R¹⁴, R¹⁵ und R¹⁶ sowie R^{15'} und R^{16'} jeweils zusammen heterozyklische Ringsysteme bilden, die aromatisch oder nicht-aromatisch sein können und unabhängig von einander sind, und wobei diese Ringsysteme weitere Heteroatome ausgewählt aus der Gruppe von Sauerstoff, Stickstoff und Schwefel oder funktionelle Gruppen ausgewählt aus der Gruppe von Acyl und Thioacyl enthalten können.

Das erfindungsgemässe Präpolymer wird vorzugsweise zur isocyanatfreien Herstellung eines Alkoxysilan-Polymeres eingesetzt. Dabei kann auf den Einsatz von toxischen Isocyanaten verzichtet werden, was die Umweltgefahren bei der Herstellung deutlich reduziert.

Dabei wird das erfindungsgemässe Präpolymer entweder
(A) mit einem Aminoalkoxysilan oder einem Mercaptoalkoxysilan gegebenenfalls in Anwesenheit eines Katalysators umgesetzt oder
(B) mit einem Diamin, einem Triamin, einem Dithiol oder einem Trithiol zu einem modifizierten Präpolymer reagiert und anschliessend mit einer eine Epoxidgruppe aufweisenden Alkoxysilanverbindung umgesetzt,
wobei ein Alkoxysilan-Polymer ausgebildet wird.

Beim Reaktionsschritt der Variante (A) wird demnach das erfindungsgemässe Präpolymer in einer Ausführungsform mit einem Aminoalkoxysilan zu einem Carbamat (Urethan) weiterreagiert. Die Reaktion findet vorzugsweise bei -20 bis 150°C statt, besonders bevorzugt bei 20 bis 100°C.

Beim Aminoalkoxysilan handelt es sich bevorzugt um eine Verbindung ausgewählt aus der Gruppe von 3-Aminopropyltrimethoxysilan, 3-Aminopropyltriethoxysilan, N-(n-Butyl)-3-aminopropyltrimethoxysilan, N-(n-Butyl)-3-aminopropylmethyldimethoxysilan, N-(n-Butyl)-3-aminopropyltriethoxysilan, N-ethyl-aminoisobutyltrimethoxysilan, N-ethyl-aminoisobutylmethyldimethoxysilan, 3-piperazinopropyltrimethoxysilan, 3-piperazinopropylmethyldimethoxysilan, 3-piperazinopropyltriethoxysilan, N-(2-aminoethyl)-3-aminopropyltrimethoxysilan, N-(2-aminoethyl)-3-aminopropyltriethoxysilan, N-(2-aminoethyl)-3-aminopropylmethyldimethoxysilan, N-Cyclohexyl-3-aminopropyltriethoxysilan und N-Cyclohexyl-3-aminopropyltrimethoxysilan. Ausserdem sind alpha-Silane wie beispielsweise N-Cyclohexylaminomethyltrietoxysilan und N-(6-Aminohexyl)aminomethoxyltriethoxysilane oder Ureidosilane wie beispielsweise 3-Ureidopropyltrimethoxysilan geeignet. Ebenso ist ein äquimolares Reaktionsprodukt eines Diamins mit einem Epoxysilan wie beispielsweise dem äquimolaren Reaktionsprodukt aus Piperazin und 3-Glycidoxypropyltrimethoxysilan ein geeignetes Alkoxysilan. Besonders bevorzugt sind Alkoxysilane mit einer primären Aminogruppe oder einer cyclischen Aminogruppe, da diese besonders reaktiv sind.

Für diese Reaktion kann einer der für den Umesterungsschritt bereits beschriebenen Katalysatoren verwendet werden. Die Reaktion führt somit zu einem Polymer, an welches ein Alkoxysilan über eine Urethangruppe gebunden ist, ohne dass Isocyanat eingesetzt werden muss, was aus ökologischen Gründen äusserst vorteilhaft ist.

Beim Reaktionsschritt der Variante (A) wird in einer anderen Ausführungsform das erfindungsgemässe Präpolymer mit einem Mercaptoalkoxysilan zu einem Thiocarbonat weiterreagiert. Die Reaktion findet vorzugsweise bei -20 bis 150°C statt, besonders bevorzugt bei 20 bis 100°C.

Beim Thiol handelt es sich bevorzugt um ein Mercaptoalkoxysilan ausgewählt aus der Gruppe von 3-Mercaptopropyltrimethoxysilan, 3-Mercaptopropyltriethoxysilan, 3-Mercaptopropylmethyldimethoxysilane und 3-Mercaptopropyltrimethoxysilan.

Beim Reaktionsschritt der Variante (B) wird das erfindungsgemässe Präpolymer mit einem geeigneten Diamin, Triamin, Dithiol oder Trithiol gegebenenfalls in Anwesenheit eines Katalysators umgesetzt.

Mögliche Diamine sind dabei beispielsweise Hexamethyldiamin, Octamethylendiamin, Methylpentandiamin, Metaxylylendiamin, Trimethylenhexamethylendiamin, Piperazin, Aminoethylpiperazin oder Isophorondiamin.

Mögliche Triamine sind beispielsweise Pentan-1,2,5-triamin, 1,2,3-Propantriamin, Phenyl-1,2,4-triamin, Phenyl-1,3,5-triamin, Pyrimidin-2,4,6-triamin.

Mögliche Mercaptoverbindungen für diese Umsetzung sind im Detail in EP 1 944 329, insbesondere in den Absätzen 68 bis 71 beschrieben, deren Inhalt hiermit in die Beschreibung über Bezugnahme aufgenommen wird. Beispiele sind Dithiothreitol, 1,2-Ethanedithiol, 1,2-Propanedithiol, 1,3-Propanedithiol, 1,4-Butanedithiol, 1,5-Pentanedithiol, 1,6-Hexanedithiol, 1,7-Heptanedithiol, 1,8-Octanedithiol, 1,9-Nonanedithiol, 1,10-Decanedithiol, 1,12-Dodecanedithiol, 2,2-Dimethyl-l,3-Propandithiol, 3-Methyl-1,5-Pentandithiol, 2-Methyl-1,8-Octandithiol, 1,1,1-tris(Mercaptomethyl)ethan, 2-Ethyl-2-Mercaptomethyl-1,3-propandithiol, tetrakis(Mercaptomethyl)methan, 1,4-cyclohexanedithiol, 1,4-bis(Mercaptomethyl)cyclohexan, bis(2-Mercaptoethyl)ether, bis(2-Mercaptoethyl)sulfide, bis(2-Mercaptoethyl)disulfid, 2,5-bis(Mercaptomethyl)-1,4-dioxan, 2,5-bis(Mercaptomethyl)-1,4-dithian, 3,3'-thiobis(Propan-1,2-dithiol), 2,2'-thiobis(Propane-1,3-dithiol); und aromatische Mercaptogruppen-enthaltende substituierte oder unsubstituierte Verbindungen wie Thiophenol, 1,2-Benzoldithiol, 1,3-Benzoldithiol, 1,4-Benzoldithiol, 1,3,5-Benzoltrithiol, Toluol-3,4-dithiol, Mercaptomethylbenzol, 1,2-bis(Mercaptomethyl)benzol, 1,3-bis(Mercaptomethyl)benzol, 1,4-bis(Mercaptomethyl) benzol und 1,3,5-tris(Mercaptomethyl)benzol.

Das so entstandene modifizierte Präpolymer mit den wenigstens zwei über Carbamatgruppen gebundenen Aminogruppen wird anschliessend in einem zweiten Schritt mit einer eine Epoxidgruppe aufweisenden Alkoxysilanverbindung zu dem Alkoxysilan-Polymer umgesetzt. Diese Reaktion zwischen einem endständigen Amin eines Polymers und einer eine Epoxidgruppe aufweisenden Alkoxysilanverbindung ist in der europäischen Patentanmeldung EP 2 341 116, insbesondere in den Absätzen [0024] bis [0042] beschrieben. Deren Inhalt wird hiermit über Bezugnahme in die Beschreibung aufgenommen.

Wird das Alkoxysilan-Polymer durch Umsetzung eines modifiziertes Präpolymer mit mindestens einer eine Epoxidgruppe aufweisenden Alkoxysilanverbindung erhalten, so liegt die bevorzugte Anzahl an Silylgruppen pro Polymer bei primären Aminogruppen im Allgemeinen zwischen 1 und der doppelten Anzahl an Aminogruppen und bei sekundären Aminogruppen zwischen 1 und der einfachen Anzahl an Aminogruppen. Gleiches gilt für Präpolymere, die mit Dithiolen modifiziert wurden.

Die Reaktivität zwischen des die wenigstens zwei Amino- oder Mercaptogruppen aufweisenden Präpolymers und der die Epoxidgruppe aufweisenden Verbindung ist relativ hoch. Die Reaktion kann optional durch Anwesenheit eines Katalysators noch beschleunigt werden. Mögliche Katalysatoren sind Triflate wie beispielsweise Bismuth(III)triflat, Lanthanum(III)triflat, Ytterbium(III)triflat, Yttrium(III)triflat, Zirconyl triflat, tertiäre Amine wie beispielsweise triethylamine, Benzyldimethylamine, Triethanolamine, Phenolderivate wie Tris-(dimethylaminomethyl) phenol.

Wird ein modifiziertes Präpolymer mit wenigstens zwei primären oder sekundären Aminogruppe oder wenigstens zwei Thiolgruppen gemäss Reaktionsvariante (B) mit einer eine Epoxidgruppe aufweisenden Alkoxysilanverbindung umgesetzt, so weist letztere bevorzugt die Strukturformel (VI) auf: 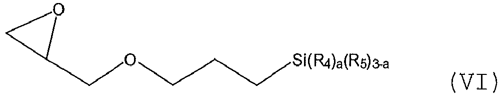 wobei R₄ ein wahlweise substituierter und/oder ein Heteroatom umfassender Kohlenwasserstoffrest und R₅ ein Alkoxy-, Acetoxy-, Oxim- oder Aminrest und a 0, 1, 2 oder 3 ist.

Im Allgemeinen ist R₄ ein Methyl- oder Ethylrest. Als R4 ist aber auch ein Aromat, ein Ester oder ein Thioester oder ein Thioether denkbar. R5 ist vorzugsweise ein Methoxy- oder Ethoxyrest.

Denkbar ist somit insbesondere (3-Glycidyloxypropyl)-dimethoxymethylsilan, (3-Glycidyloxypropyl)trimethoxysilan, (3-Glycidyloxypropyl)diethoxymethylsilan oder (3-Glycidyloxypropyl)triethoxysilan.

Weitere eine Epoxidgruppe aufweisende Alkoxysilanverbindungen, die für die Zwecke der vorliegenden Erfindung denkbar sind, werden in WO 2008/031895 (Seite 7, Nr. 41 bis 47) aufgeführt, deren Inhalt hiermit durch Bezugnahme miteingeschlossen wird. Weiter sei diesbezüglich [2-(3,4-Epoxycyclohexyl)ethyl]trimethoxysilan erwähnt.

Alternativ ist es auch möglich, dass das erfindungsgemässe Präpolymer mit den wenigstens durchschnittlich 1.5 Carbonatgruppen vor den Reaktionsschritten gemäss Variante (A) oder Variante (B) mit einem Alkohol oder einem aktivierten Alkohol umzuestern (Variante (C)). Vorzugsweise handelt es sich bei dem aktivierten Alkohol um Glycerincarbonat. Die Reaktion führt zu einem modifizierten Präpolymer, an dessen linearen Carbonatgruppen zusätzlich cyclische Carbonatgruppen gebunden sind. Die cyclischen Carbonatgruppen weisen eine deutlich höhere Reaktivität auf. Anschliessend kann ein Aminoalkoxysilan oder ein Mercaptoalkoxysilan über eine Hydroxyurethan- oder eine Hydroxythiourethanbindung an das modifizierte Präpolymer gebunden werden.

Vorzugsweise liegt die gemittelte Anzahl Silylgruppen pro Alkoxysilan-Polymer in einem Bereich von 1 bis 10 und hängt von der Anzahl der Carbonatgruppen im Präpolymer ab. Bei einem linearen Polymer-Rückgrat liegt die Anzahl in der Regel bei ca. 2, bei einem verzweigten Polymer-Rückgrat in der Regel höher.

Die gemäss den oben beschriebenen Reaktionsverfahren (Variante (A), Variante (B) oder Variante (C)) erhaltenen Alkoxysilan-Polymere sind vorzugsweise in einer Zusammensetzung enthalten, die als feuchtigkeitshärtenden Dicht- oder Klebstoff verwendet wird. Eine solche Zusammensetzung ist im Wesentlichen wasserfrei. Ein feuchtigkeitshärtender Dicht- oder Klebstoff härtet nach Kontakt mit Luftfeuchtigkeit zu einem Dichtungsmittel oder Klebstoff aus. Die erfindungsgemäss erhältlichen Alkoxysilan-Polymere sind unter Ausschluss von Luftfeuchtigkeit lagerstabil.

Im Besonderen können bei Verwendung der Verbindung in einer Dicht- oder Klebstoffzusammensetzung durch die Wahl des Polymer-Rückgrats einerseits die Eigenschaften der pastösen Zusammensetzung, wie z.B. das toxische Profil, die Viskosität, Rheologie, Verarbeitbarkeit, Standfestigkeit usw., beeinflusst werden. Andererseits können durch die Wahl des Polymer-Rückgrats die Eigenschaften der ausgehärteten Masse beeinflusst werden. So können insbesondere hinsichtlich der Beständigkeit, also z.B. der Hitzebeständigkeit, der Brandbeständigkeit, der Tieftemperaturflexibilität, der Tieftemperaturverarbeitbarkeit, der UV-Stabilität, der Wetterstabilität, der Chemikalienbeständigkeit, der Fäkalienbeständigkeit, der Öl- und Kraftstoffbeständigkeit, der Wasserbeständigkeit und der Abriebfestigkeit, aber auch hinsichtlich der mechanischen Eigenschaften, also z.B. der Zugfestigkeit, der Härte, der Elastizität und der Klebrigkeit, die gewünschten Eigenschaften eingestellt werden. Ähnliches gilt hinsichtlich der Durchlässigkeit, d.h. der Wasser-, Dampf- und Gasdurchlässigkeit, und hinsichtlich des toxischen Profils, also z.B. der Lebensmittelverträglichkeit, der Trinkwasserverträglichkeit und der biologischen Abbaubarkeit, der ausgehärteten Dicht- oder Klebstoffzusammensetzung, die nach Bedarf eingestellt werden können.

Insbesondere bei der Verwendung der erfindungsgemässen Verbindung in einer Klebestoffzusammensetzung können die Haftungseigenschäften, also z.B. die Kunststoffhaftung, die Nasshaftung, die Haftung auf porösen und alkalischen oder sauren Oberflächen und die Haftung auf nassen Untergründen, durch entsprechende Wahl des Polymer-Rückgrats in geeigneter Weise auf den jeweiligen Anwendungszweck hin, eingestellt werden. Zudem bestimmt das Polymer-Rückgrat massgeblich die physikalischen Eigenschaften der ausgehärteten Masse, wie z.B. den Brechungsindex und die elektrische, thermische und akustische Leitfähigkeit bzw. Isolation.

Weiter sind Verbindungen bevorzugt, in denen das Polymer-Rückgrat wenigstens teilweise oder vollständig Polysulfid ist, das vorzugsweise terminal mit Hydroxygruppen funktionalisiert ist. Solche finalen Polymere führen zu Dicht- und Klebstoffen mit einer guten Nasshaftung, die zudem eine hohe chemische, thermische und photolytische Stabilität aufweisen.

Aufgrund der Variabilität der möglichen einzustellenden Eigenschaften eignen sich die Alkoxysilan-Polymere der vorliegenden Erfindung insbesondere zum Einsatz in Anwendungsgebieten, in denen eine solche "Massschneiderung" von Eigenschaften erwünscht ist. Bevorzugt ist beispielsweise ein Einsatz in der Bau-, Maschinen-, Elektro-, Fahrzeug- oder Luftfahrtindustrie, in der etwa die Wasserbeständigkeit und die Gasdurchlässigkeit für Flächenabdichtungen, die mechanischen Eigenschaften und Hafteigenschaften struktureller Verklebungen sowie etwa die Brandschutzeigenschaften der entsprechenden Zusammensetzung usw. eingestellt werden können.

Die durch das Präpolymer erhältliche chemische Beständigkeit, insbesondere die Öl- und Kraftstoffbeständigkeit der Alkoxysilan-Polymere, ermöglicht auch den Einsatz in der Automobilindustrie.

Denkbar ist im Übrigen auch etwa die Verwendung im Schiffsbau aufgrund der erhältlichen Wetterbeständigkeit, oder in elektronischen Anwendungen, aufgrund der erhältlichen Isolationseigenschaften. Für letztgenannte Anwendungen ist es erfindungsgemäss zudem möglich, ein silikonfreies System zu wählen, womit die bei konventionellen Silikonmassen beobachteten Nachteile hinsichtlich des Ausschwitzens umgangen werden können.

Das Alkoxysilan-Polymer kann des Weiteren in Beschichtungen wie beispielsweise Antikratzbeschichtungen, Haft- oder Antihaftbeschichtungen, Antigraffitibeschichtungen, oder Beschichtungen für Textilien verwendet werden. Das Alkoxysilan-Polymer kann generell in 1-Komponenten oder 2-Komponentensystemen eingesetzt werden. Weitere Möglichkeiten sind der Einsatz in isocyanatfreien Schäumen für Bau und Industrieanwendungen oder beispielsweise als viskoelastischer Schaum oder als Kaltschaum in der Matratzenherstellung. Denkbar ist des Weiteren auch der Einsatz als Formgedächtnispolymere ("shape-memory polymer"), welche beispielsweise in der Medizinaltechnik, Robotik oder Automobilindustrie eingesetzt werden können.

Gemäss einem weiteren Aspekt der vorliegenden Erfindung ist es möglich, mit dem erfindungsgemässen Präpolymer oder dem modifizierten Präpolymer komplett isocyanatfreie Polyurethane oder (Poly)hydroxyurethane zu bilden.

Beispielsweise kann das erfindungsgemässe Präpolymer mit einem blockierten Diamin umgesetzt werden. Ein blockiertes Diamin zeichnet sich dadurch aus, dass die Aminogruppen erst durch Kontakt mit Wasser (oder Feuchtigkeit) aktiviert werden. Ein Beispiel für ein blockiertes Diamin ist Vestamin A139. Das blockierte Diamin reagiert mit Luftfeuchtigkeit zu einem Diamin, welches anschliessend das Organocarbonat-oder Carbamat-terminierte Präpolymer zu einem Polyurethan oder einem Polyhydroxyurethan aushärten lässt. Ein solcher Klebstoff, enthaltend ein blockiertes Diamin und das erfindungsgemässe Präpolymer, ist langzeitbeständig und wärmefest.

Die Erfindung wird an den nachfolgenden Beispielen weiter erläutert.

### Bespiel 1: Methylcarbonat-terminierter Polyether mit Aminosilan

95.7g Polyether-diol (Desmophen 4028BD der Firma Covestro) werden mit 17.3g Dimethylcarbonat (4:1 bezogen auf OH-Gruppen) und 0.1g 1,5,7-Triazabicyclo[4.4.0]dec-5-en (TBD) während 18h bei 120°C rückflussiert. Das entstandene Methanol und der Überschuss an Dimethylcarbonat kann anschliessend unter Vakuum abdestilliert werden. Als Produkt wird Methylcarbonat-terminierter Polyether erhalten.

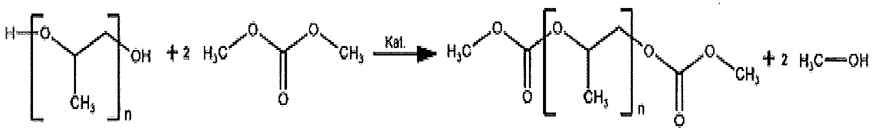

50g des Methylcarbonat-terminierten Polymers werden mit 4.3g 3-Aminopropyltrimethoxysilan und 0.1g 1,5,7-Triazabicyclo[4.4.0]dec-5-en (TBD) während 24h bei 60°C reagiert. Das entstandene Methanol wird abdestilliert. Als Produkt wird Trimethoxysilan-terminierter Polyether erhalten. Die Trimethoxysilangruppen sind über eine Urethanbindung mit dem Polyether verbunden.

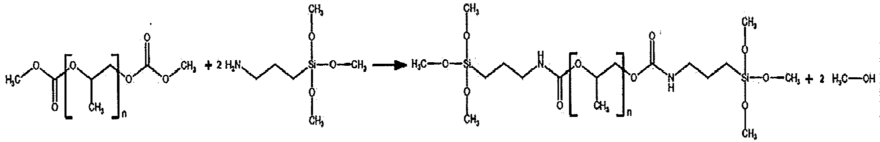

Das Polymer kann zur Herstellung von feuchtigkeitshärtenden Kleb- Dicht- und Beschichtungsstoffen auf Basis silan-terminierter Polymere verwendet werden.

### Beispiel 2: Methylcarbonat-terminierter Polyether mit einem Diamin, anschliessend Umsetzung mit Epoxysilane

95.7g Polyether-diol (Desmophen 4028BD der Firma Covestro) werden mit 17.3g Dimethylcarbonat (4:1 bezogen auf OH-Gruppen) und 0.1g 1,5,7-Triazabicyclo[4.4.0]dec-5-en (TBD) während 18h bei 120°C rückflussiert. Das entstandene Methanol und der Überschuss an Dimethylcarbonat können anschliessend unter Vakuum abdestilliert werden. Als Produkt wird Methylcarbonat-terminierter Polyether erhalten.

50g des Methylcarbonat-terminierten Polymers werden mit 2.84g Hexamethylendiamin und 0.1g 1,5,7-Triazabicyclo[4.4.0]dec-5-en (TBD) während 24h bei 60°C reagiert. Das entstandene Methanol wird abdestilliert. Als Produkt wird ein Amin-terminierter Polyether erhalten. Dieser kann mit einer eine Epoxidgruppe aufweisenden Alkoxysilanverbindung, z.B. (3-Glycidyloxypropyl)trimethoxysilan, zu einem Trimethoxysilan-terminierten Polyether umgesetzt werden. Solche Reaktionen sind in der europäischen Patentanmeldung EP-A-2 341 116 in Detail beschrieben, auf die hiermit Bezug genommen wird.

Das erhaltene Polymer kann zur Herstellung von feuchtigkeitshärtenden Kleb- Dicht- und Beschichtungsstoffen auf Basis silan-terminierter Polymere verwendet werden.

### Beispiel 3: Aushärtung eines Methylcarbonat-terminierten Polyethers zu einem isocyanatfreien Polyurethan

95.7g Polyether-diol (Desmophen 4028BD der Firma Covestro) werden mit 17.3g Dimethylcarbonat (4:1 bezogen auf OH-Gruppen) und 0.1g 1,5,7-Triazabicyclo[4.4.0]dec-5-ene (TBD) während 18h bei 120°C rückflussiert. Das entstandene Methanol und der Überschuss an Dimethylcarbonat kann anschliessend unter Vakuum abdestilliert werden. Als Produkt wird Methylcarbonat-terminierter Polyether erhalten.

50g des Methylcarbonat-terminierten Polymers werden mit 1.42g Hexamethylendiamin und 0.1g 1,5,7-Triazabicyclo[4.4.0]dec-5-ene (TBD), gegebenfalls in einem Lösungsmittel oder in Wasser, in Anwesenheit von Hilfsstoffen wie Stabilisatoren und Emulgatoren, während 24h bei 90°C gemischt. Die Molmasse des Polyether-Polyurethans kann durch die Hilfsstoffe und Reaktionsbedingungen beeinflusst werden. Die erhaltene Dispersion kann anschliessend zum Beispiel für Polyurethandispersionsklebstoffe verwendet werden.

### Beispiel 4: Imidazolcarbamat-terminierter Polyether mit Aminosilan

95.5g Polyether-diol (Desmophen 4028BD der Firma Covestro) werden mit 7.76g 1,1'-Carbonyldiimidazol (CDI) (1:1 bezogen auf OH-Gruppen) während 12h bei 60°C unter Stickstoff gerührt. Als Produkt wird Imidazolcarbamat-terminierter Polyether erhalten.

50g des Imidazolcarbamat-terminierten Polymers werden mit 4.3g 3-Aminopropyltrimethoxysilan während 24h bei 60°C reagiert. Als Produkt wird Trimethoxysilan-terminierter Polyether erhalten. Die Trimethoxysilangruppen sind über eine Urethanbindung mit dem Polyether verbunden.

Das erhaltene Trimethoxysilan-terminierte Polymer lässt sich zinnfrei katalysieren und vernetzt nach Zugabe von 0.2% 1,8-Diazabicyclo[5.4.0]undec-7-en und 1% 3-Aminopropyltrimethoxysilan unter Luftfeuchtigkeit zu einer elastischen Masse mit einer Shore A Härte von 41 nach 7 Tagen.

## Patentansprüche

1. Verwendung eines Präpolymers mit wenigstens durchschnittlich 1.5 Carbonatgruppen der Formeln (I) und (II) oder Thiocarbonatgruppen der Formeln (Ia) und (IIa), Carbamatgruppen der Formeln (XI) und (XII) oder Thiocarbamatgruppen der Formeln (XIa) und (XIIa) 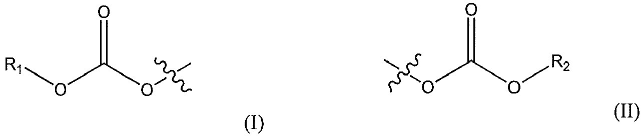 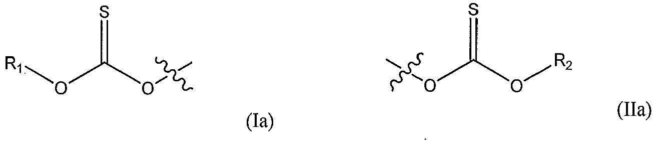 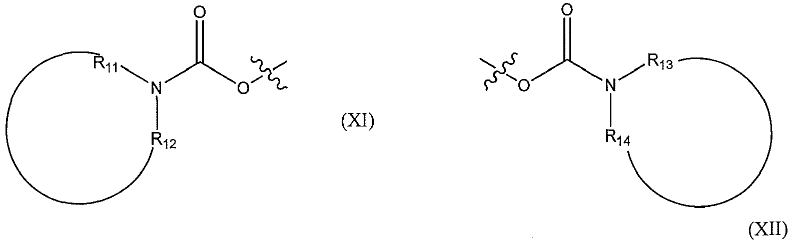 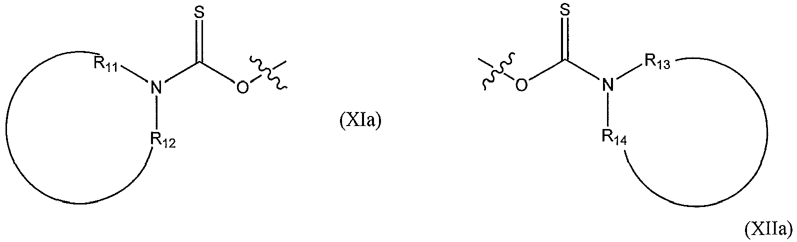
in denen R¹ und R² unabhängig voneinander lineare oder verzweigte C₁ bis C₆ Alkyl-, C₁ bis C₆ Acyl-, C₃ bis C₈ Cycloaliphatische-, C₆ bis C₁₀ Aryl- oder Imidreste oder C₃ bis C₆ Alkohole sind,
R¹¹ und R¹² sowie R¹³ und R¹⁴ jeweils zusammen heterozyklische Ringsysteme bilden, die aromatisch oder nicht-aromatisch sein können und unabhängig voneinander sind, und wobei diese Ringsysteme weitere Heteroatome ausgewählt aus der Gruppe von Sauerstoff, Stickstoff und Schwefel oder funktionelle Gruppen ausgewählt aus der Gruppe von Acyl und Thioacyl enthalten können,
als Edukt zur isocyanatfreien und isothiocyanatfreien Herstellung von Alkoxysilan-Polymeren, deren Alkoxysilangruppen über Carbamatgruppen, Thiocarbonatgruppen oder Thiocarbamatgruppen an das Polymer-Rückgrat gebunden sind,
wobei die wenigstens durchschnittlich 1.5 Carbonat-, Thiocarbonat-, Carbamat- oder Thiocarbamatgruppen unmittelbar über je ein Sauerstoffatom an das Polymer-Rückgrat gebunden sind, wobei dieses je eine Sauerstoffatom seinen Ursprung in der Umsetzung einer primären, sekundären oder tertiären Hydroxy-Gruppe des Polymer-Rückgrats und einer reaktiven Verbindung hat, die ausgewählt ist aus der Gruppe bestehend aus einem Diorganocarbonat, einem Diorganothiocarbonat, einem cyclischen Carbonat, einem cyclischen Thiocarbonat, einem N,N-Diheterocycloharnstoffderivat und einem N,N-Diheterocyclothioharnstoffderivat.

2. Verwendung gemäss Anspruch 1, wobei das Präpolymer wenigstens durchschnittlich 1.5 Carbonatgruppen 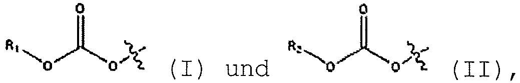 aufweist,
in denen R¹ und R² unabhängig voneinander lineare oder verzweigte C₁ bis C₆ Alkyl-, C₁ bis C₆ Acyl-, C₃ bis C₈ Cycloaliphatische-, C₆ bis C₁₀ Aryl- oder Imidreste oder C₃ bis C₆ Alkohole sind,
als Edukt zur isocyanatfreien und isothiocyanatfreien Herstellung von Alkoxysilan-Polymeren, deren Alkoxysilangruppen über Carbamatgruppen oder Thiocarbonatgruppen an das Polymer-Rückgrat gebunden sind,
wobei die wenigstens durchschnittlich 1.5 Carbonatgruppen unmittelbar über je ein Sauerstoffatom an das Polymer-Rückgrat gebunden sind, wobei dieses je eine Sauerstoffatom seinen Ursprung in der Umesterungsreaktion einer primären, sekundären oder tertiären Hydroxy-Gruppe des Polymer-Rückgrats und eines Diorganocarbonats oder eines cyclischen Carbonats hat.

3. Verwendung gemäss Anspruch 1 oder 2, wobei das Polymer-Rückgrat linear oder verzweigt ist und ausgewählt ist aus der Gruppe bestehend aus Polyethern, Polyolefinen, Polyestern, Polycarbonaten, Polyacrylaten, Polysulfiden, Polysiloxanen, Polyacetalen und Copolymeren davon.

4. Verwendung gemäss einem der vorangehenden Ansprüche, wobei das N,N-Diheterocycloharnstoffderivat ausgewählt ist aus der Gruppe bestehend aus 1,1'-Carbonyldiimidazol (CDI), 1,1'-Carbonyldibenzimidazol, 1,1'-Carbonyldi(1,2,4)-triazol (CDT), 1,1'-Carbonylbis(2-methylimidazol), 1,1'-Carbonyldibenzotriazol und Carbonylbiscaprolactam (CBC).

5. Verwendung gemäss einem der vorangehenden Ansprüche, wobei die wenigstens durchschnittlich 1.5 Carbonat-, Thiocarbonat, Carbamat- oder Thiocarbamatgruppen des Präpolymers der allgemeinen Formeln III, IIIa, XIII oder XIIIa 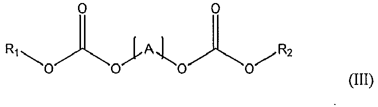 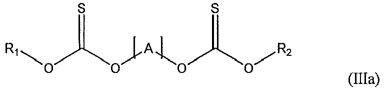 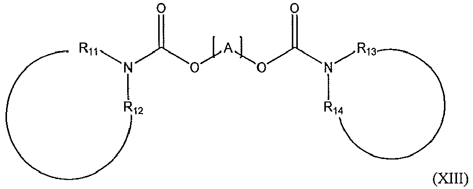 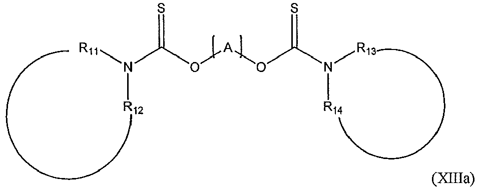
wobei [A] das Polymer-Rückgrat bedeutet und
R₁, R₂, R₁₁, R₁₂, R₁₃ und R₁₄ die gleiche Bedeutung wie in Anspruch 1 haben,
an den terminalen Enden des Polymer-Rückgrats angeordnet sind.

6. Verwendung gemäss einem der vorangehenden Ansprüche, wobei R¹ und R² gleich sind und vorzugsweise
Methyl, Ethyl, Phenyl, Succinimid oder Maleinimid, besonders bevorzugt Methyl oder Phenyl sind.

7. Verwendung gemäss einem der vorangehenden Ansprüche, wobei
(a) wenigstens ein Teil des Polymer-Rückgrats linear und vorzugsweise das ganze Polymer-Rückgrat linear ist, oder
(b) wenigstens ein Teil des Polymer-Rückgrats verzweigt ist und über eine oder mehrere Verzweigungen verfügt.

8. Verwendung gemäss Anspruch 7, wobei die eine oder mehrere Verzweigungen eine oder mehrere Ether-, Ester-, Carbonat-, Acrylat- oder Sulfidgruppen enthalten können und optional eine terminale Gruppe der Formeln (IV) oder (XIV) 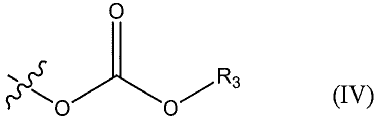 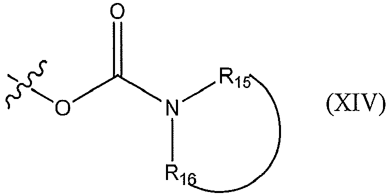 aufweisen kann, wobei R₃ die gleiche Definition hat wie R₁ und R₂, und R¹⁵ und R¹⁶ jeweils zusammen ein heterozyklische Ringsystem bilden, das die gleiche Definition hat wie die heterozyklischen Ringsysteme, die aus R¹¹ und R¹², respektive aus R¹³ und R¹⁴ gebildet sind.

9. Verwendung gemäss Anspruch 8, wobei jede Verzweigung eine terminale Gruppe der Formel IV oder der Formel XIV aufweist.

10. Verwendung gemäss einem der vorangehenden Ansprüche, wobei das Polymer-Rückgrat ausgewählt ist aus der Gruppe bestehend aus Polyethern, Polyestern, Polycarbonaten, Polysulfiden, Polysiloxanen oder Polyacrylaten und Copolymeren davon.

11. Verwendung gemäss einem der vorangehenden Ansprüche, wobei das Polymer-Rückgrat ein Polyether, vorzugsweise ein Polyethylenglycol oder ein Polypropylenglycol, besonders bevorzugt ein lineares oder ein mehrarmiges Polypropylenglycol ist.

12. Verwendung gemäss einem der vorangehenden Ansprüche, in dem das Präpolymer ausgewählt ist aus der Gruppe bestehend aus 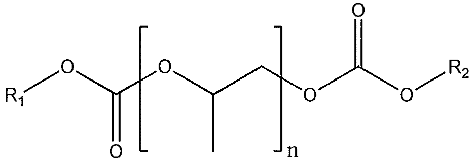 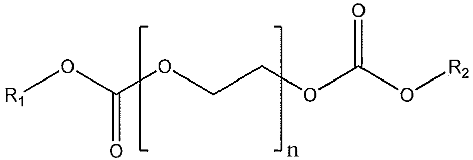 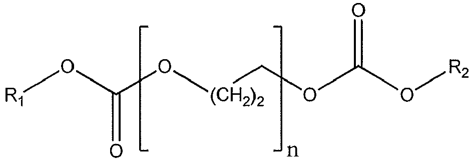 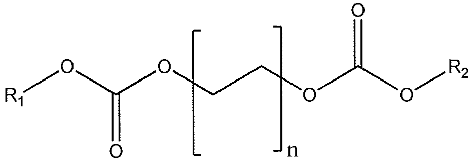 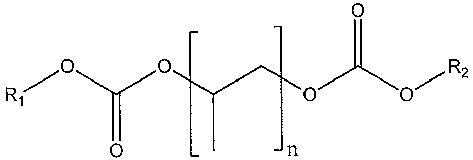 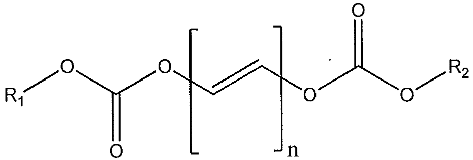 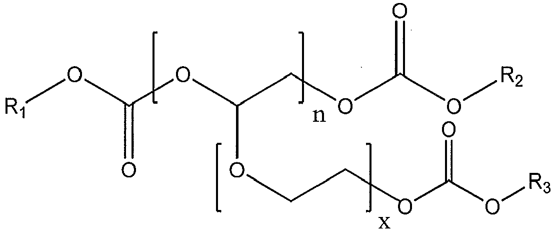 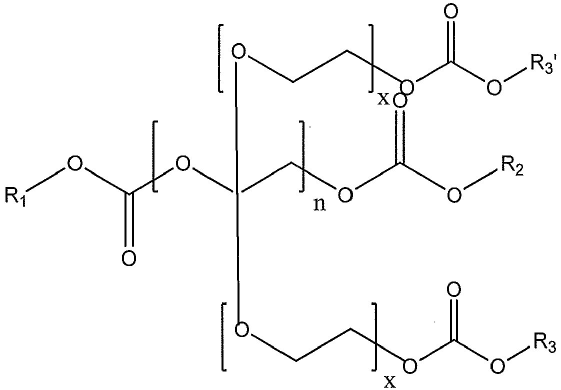 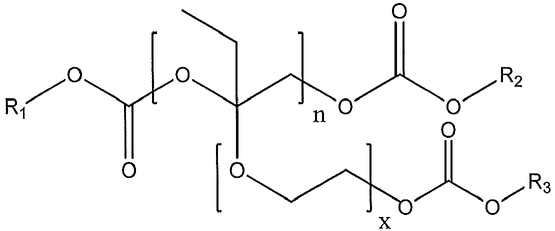 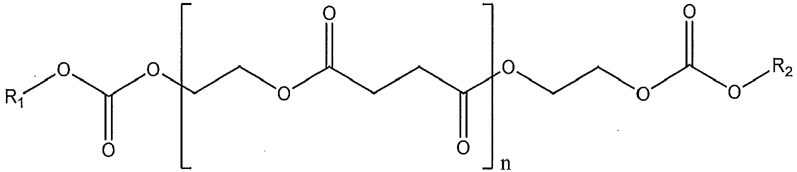 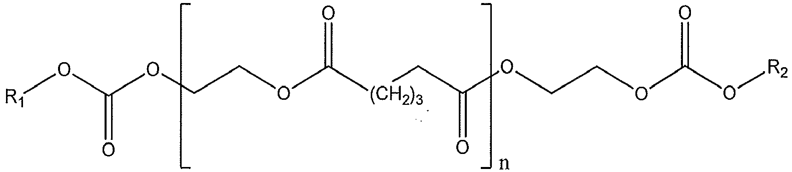 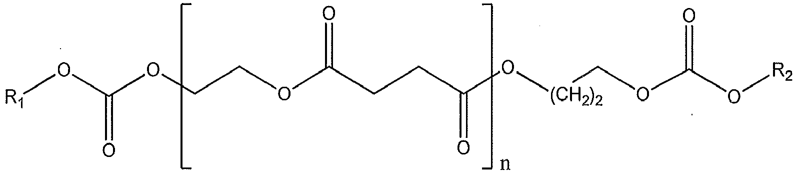 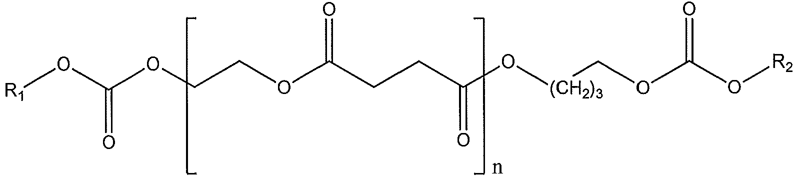 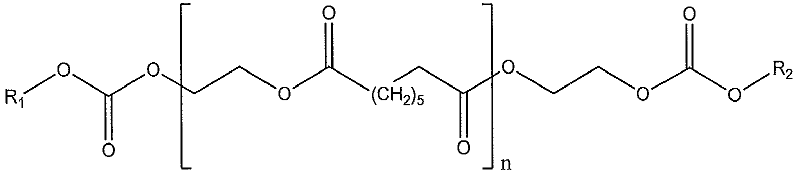 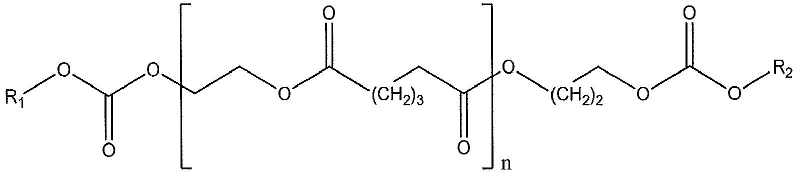 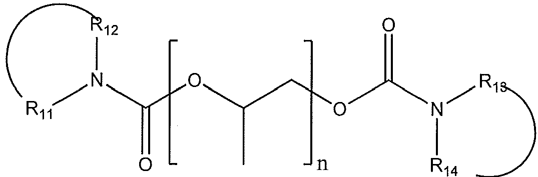 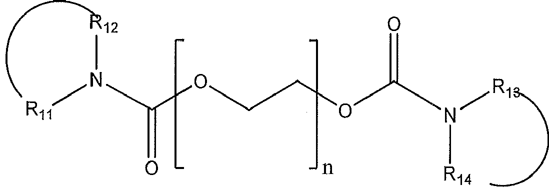 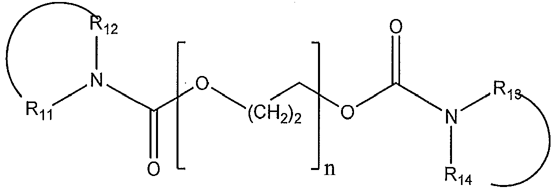 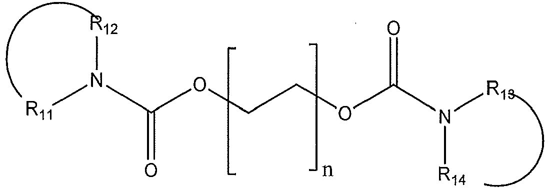 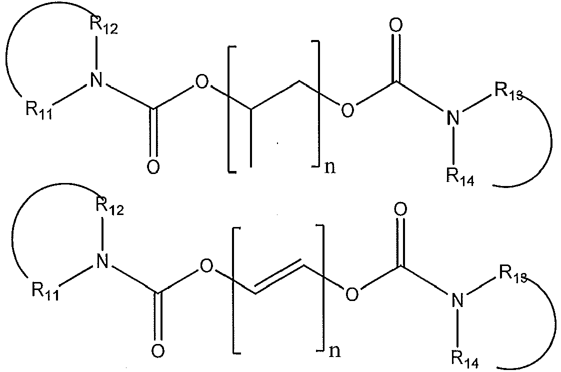 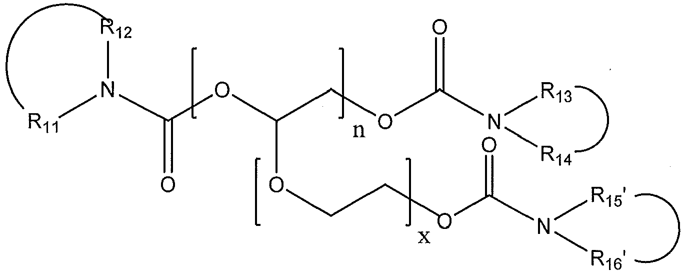 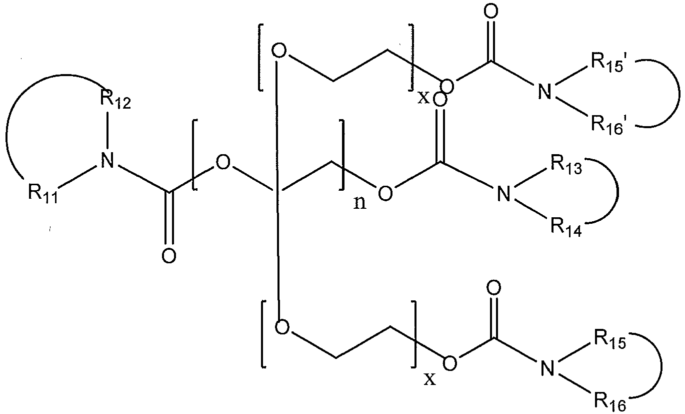 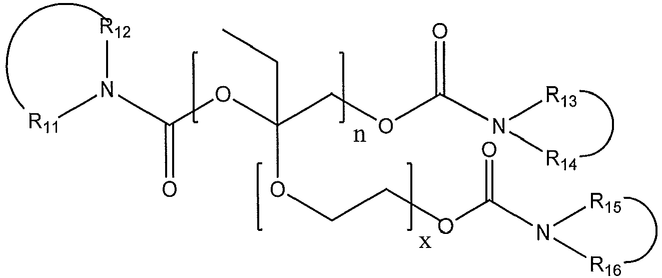 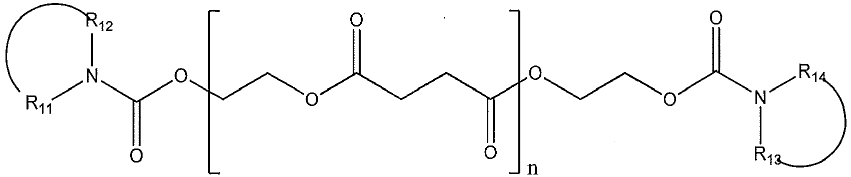 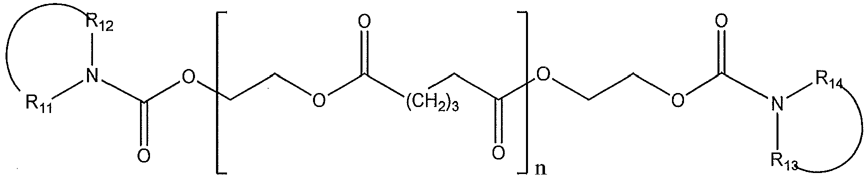 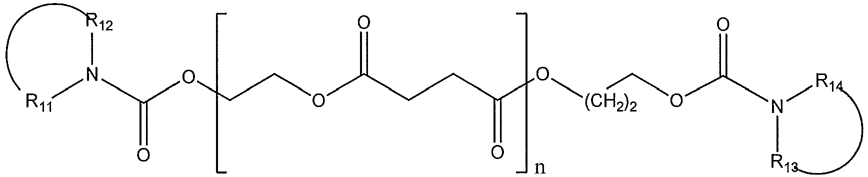 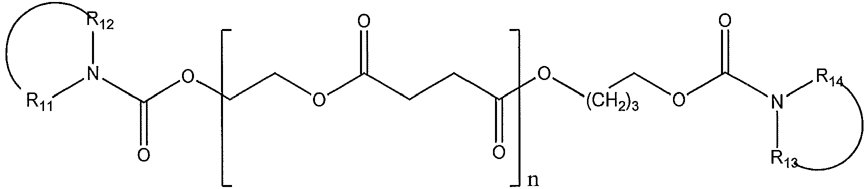 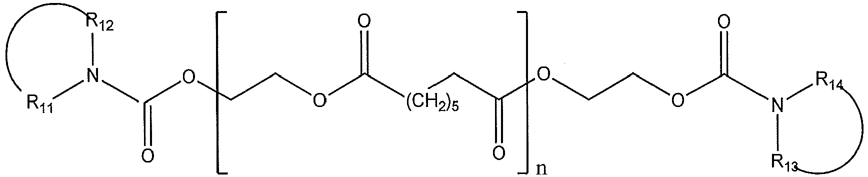 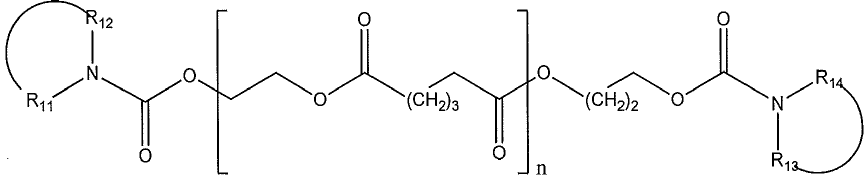
n die Anzahl der Monomereinheiten darstellt und das Molekulargewicht zwischen 1000 und 100'000 g/mol, vorzugsweise zwischen 5'000 und 50'000 g/mol ist, und
R¹, R², R³ und R^{3'} unabhängig voneinander lineare oder verzweigte C₁ bis C₆ Alkyl-, C₁ bis C₆ Acyl-, C₃ bis C₈ Cycloaliphatische-, C₆ bis C₁₀ Arly oder Imidreste, vorzugsweise R¹, R², R³ und R^{3'} alle gleich sind, besonders bevorzugt alle Methyl, Ethyl oder Phenyl sind und
R¹¹ und R¹², R¹³ und R¹⁴, R¹⁵ und R¹⁶ sowie R^{15'} und R^{16'} jeweils zusammen heterozyklische Ringsysteme bilden, die aromatisch oder nicht-aromatisch sein können und unabhängig von einander sind, und wobei diese Ringsysteme weitere Heteroatome ausgewählt aus der Gruppe von Sauerstoff, Stickstoff und Schwefel oder funktionelle Gruppen ausgewählt aus der Gruppe von Acyl und Thioacyl enthalten können.

13. Verfahren zur Herstellung eines Alkoxysilan-Polymers durch Reaktion des Präpolymers gemäss einem der Ansprüche 1 bis 12
(A) mit einem Aminoalkoxysilan oder einem Mercaptoalkoxysilan gegebenenfalls in Anwesenheit eines Katalysators oder
(B) mit einem Diamin, einem Triamin, einem Dithiol oder einem Trithiol zu einem modifizierten Präpolymer und anschliessender Umsetzung mit einer eine Epoxidgruppe aufweisenden Alkoxysilanverbindung,
wobei ein Alkoxysilan-Polymer ausgebildet wird.

14. Verfahren gemäss Anspruch 13, indem das Präpolymer vor den Reaktionsschritten gemäss Variante (A) oder Variante (B) mit einem Alkohol oder einem aktivierten Alkohol umgesetzt wird, wobei der aktivierte Alkohol vorzugsweise Glycerincarbonat ist.

15. Verfahren gemäss einem der Ansprüche 13 oder 14, indem in Variante (A) das Aminoalkoxysilan ausgewählt ist aus der Gruppe von 3-Aminopropyltrimethoxysilan, 3-Aminopropyltriethoxysilan, N-(n-Butyl)-3-aminopropyltrimethoxysilan, N-(n-Butyl)-3-aminopropylmethyldimethoxysilan, N-(n-Butyl)-3-aminopropyltriethoxysilan, N-ethyl-aminoisobutyltrimethoxysilan, N-ethyl-aminoisobutylmethyldimethoxysilan, 3-piperazinopropyltrimethoxysilan, 3-piperazinopropylmethyldimethoxysilan, 3-piperazinopropyltriethoxysilan, N-(2-aminoethyl)-3-aminopropyltrimethoxysilan, N-(2-aminoethyl)-3-aminopropyltriethoxysilan, N-(2-aminoethyl)-3-aminopropylmethyldimethoxysilan und ein äquimolares Reaktionsprodukt aus Piperazin und Glycidoxypropyltrimethoxysilan und
das Mercaptoalkoxysilan ausgewählt ist aus der Gruppe von 3-Mercaptopropyltrimethoxysilan, 3-Mercaptopropyltriethoxysilan, 3-Mercaptopropylmethyldimethoxysilane und 3-Mercaptopropyltrimethoxysilan.

16. Verwendung einer Zusammensetzung, enthaltend ein Alkoxysilan-Polymer, das nach einem Verfahren gemäss einem der Ansprüche 13 bis 15 hergestellt wurde, als feuchtigkeitshärtenden Dicht- oder Klebstoff, **dadurch gekennzeichnet, dass** das Alkoxysilan-Polymer isocyanat- und/oder isothiocyanatfrei ist.

## Claims

1. The use of a prepolymer having at least on average 1.5 carbonate groups of the formulae (I) and (II) or thiocarbonate groups of the formulae (Ia) and (IIa), carbamate groups of the formulae (XI) and (XII) or thiocarbamate groups of the formulae (XIa) and (XIIa) 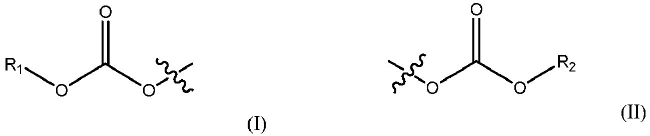 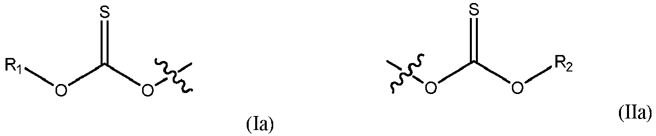 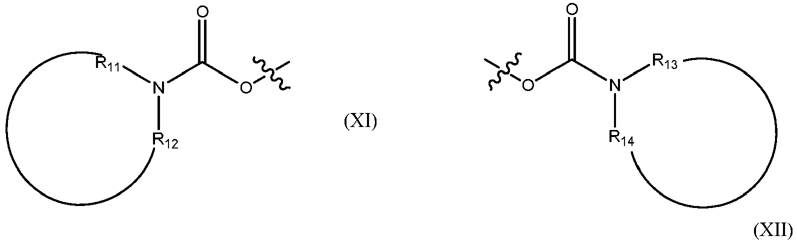 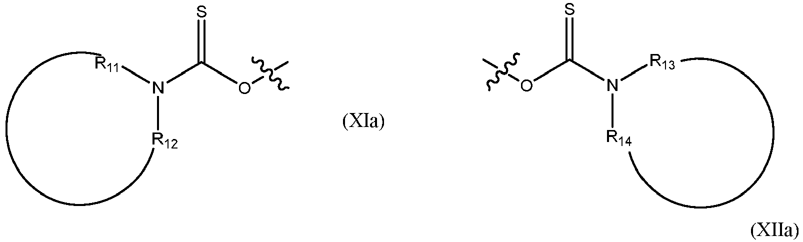
in which R¹ and R² independently of one another are linear or branched C₁ to C₆ alkyl, C₁ to C₆ acyl, C₃ to C₈ cycloaliphatic, C₆ to C₁₀ aryl or imide radicals or C₃ to C₆ alcohols,
R¹¹ and R¹² and also R¹³ and R¹⁴ in each case together form heterocyclic ring systems which may be aromatic or nonaromatic and are independent of one another, and where these ring systems may contain further heteroatoms selected from the group of oxygen, nitrogen, and sulfur or may contain functional groups selected from the group of acyl and thioacyl,
as a reactant for the isocyanate-free and isothiocyanate-free preparation of alkoxysilane polymers, whose alkoxysilane groups are bonded via carbamate groups, thiocarbonate groups or thiocarbamate groups to the polymer backbone,
where the at least on average 1.5 carbonate, thiocarbonate, carbamate or thiocarbamate groups are bonded directly via one oxygen atom each to the polymer backbone, this one oxygen atom each having its origin in the reaction of a primary, secondary or tertiary hydroxyl group of the polymer backbone and a reactive compound selected from the group consisting of a diorganocarbonate, a diorganothiocarbonate, a cyclic carbonate, a cyclic thiocarbonate, an N,N-diheterocyclourea derivative, and an N,N-diheterocyclothiourea derivative.

2. The use as claimed in claim 1, where the prepolymer has at least on average 1.5 carbonate groups 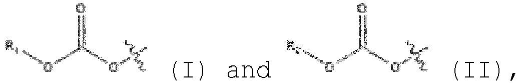
in which R¹ and R² independently of one another are linear or branched C₁ to C₆ alkyl, C₁ to C₆ acyl, C₃ to C₈ cycloaliphatic, C₆ to C₁₀ aryl or imide radicals or C₃ to C₆ alcohols,
as a reactant for the isocyanate-free and isothiocyanate-free preparation of alkoxysilane polymers whose alkoxysilane groups are bonded via carbamate groups or thiocarbonate groups to the polymer backbone,
where the at least on average 1.5 carbonate groups are bonded directly via one oxygen atom each to the polymer backbone, this one oxygen atom each having its origin in the transesterification reaction of a primary, secondary or tertiary hydroxyl group of the polymer backbone and a diorganocarbonate or a cyclic carbonate.

3. The use as claimed in claim 1 or 2, where the polymer backbone is linear or branched and is selected from the group consisting of polyethers, polyolefins, polyesters, polycarbonates, polyacrylates, polysulfides, polysiloxanes, polyacetals, and copolymers thereof.

4. The use as claimed in any of the preceding claims, where the N,N-diheterocyclourea derivative is selected from the group consisting of 1,1'-carbonyldiimidazole (CDI), 1,1'-carbonyldibenzimidazole, 1,1'-carbonyldi(1,2,4)-triazole (CDT), 1,1'-carbonylbis(2-methylimidazole), 1,1'-carbonyldibenzotriazole, and carbonylbiscaprolactam (CBC).

5. The use as claimed in any of the preceding claims, where the at least on average 1.5 carbonate, thiocarbonate, carbamate or thiocarbamate groups of the prepolymer of the general formulae III, IIIa, XIII or XIIIa 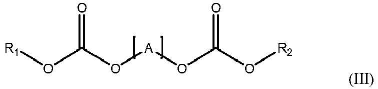 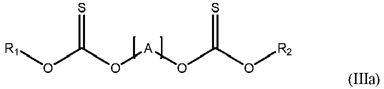 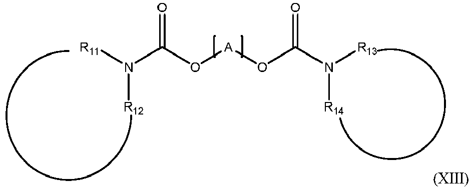 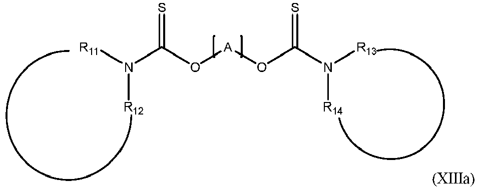
where [A] is the polymer backbone and
R₁, R₂, R₁₁, R₁₂, R₁₃ and R₁₄ have the same definition as in claim 1,
are arranged at the terminal ends of the polymer backbone.

6. The use as claimed in any of the preceding claims, where R¹ and R² are identical and preferably are methyl, ethyl, phenyl, succinimide or maleimide, more preferably methyl or phenyl.

7. The use as claimed in any of the preceding claims, where
(a) at least part of the polymer backbone is linear and preferably the entire polymer backbone is linear, or
(b) at least part of the polymer backbone is branched and possesses one or more branchings.

8. The use as claimed in claim 7, where the one or more branchings may comprise one or more ether, ester, carbonate, acrylate or sulfide groups and may optionally have a terminal group of the formulae (IV) or (XIV) 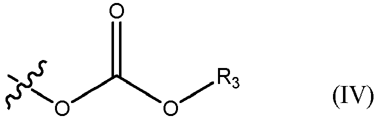 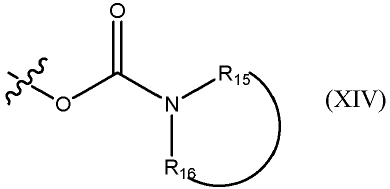 where R₃ has the same definition as R₁ and R₂, and R¹⁵ and R¹⁶ in each case together form a heterocyclic ring system having the same definition as the heterocyclic ring systems formed respectively from R¹¹ and R¹² and from R¹³ and R¹⁴.

9. The use as claimed in claim 8, where each branching has a terminal group of the formula IV or of the formula XIV.

10. The use as claimed in any of the preceding claims, where the polymer backbone is selected from the group consisting of polyethers, polyesters, polycarbonates, polysulfides, polysiloxanes or polyacrylates and copolymers thereof.

11. The use as claimed in any of the preceding claims, where the polymer backbone is a polyether, preferably a polyethylene glycol or a polypropylene glycol, more preferably a linear or a multiarm polypropylene glycol.

12. The use as claimed in any of the preceding claims, wherein the prepolymer is selected from the group consisting of 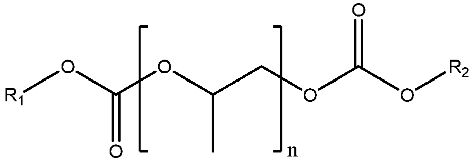 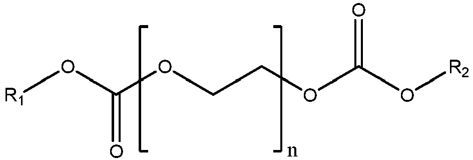 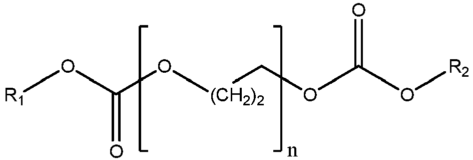 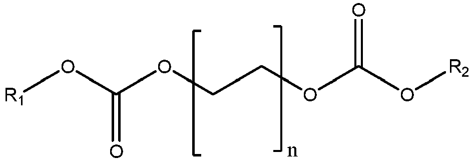 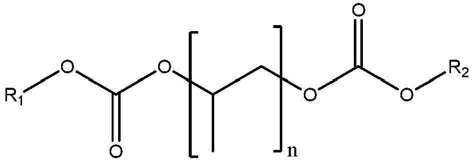 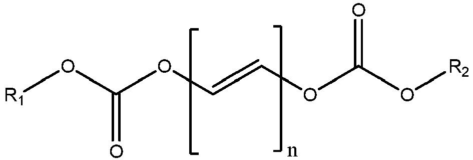 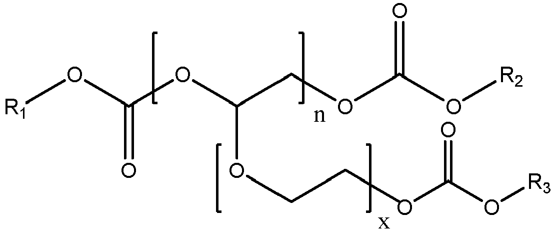 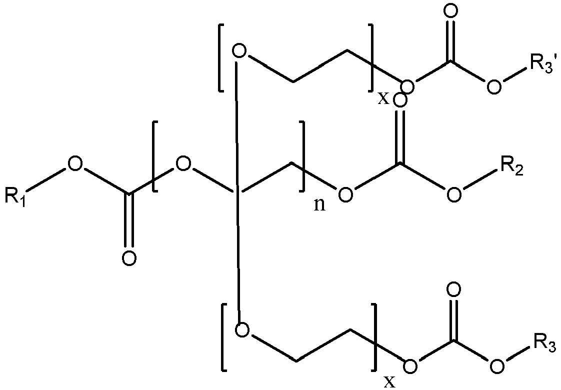 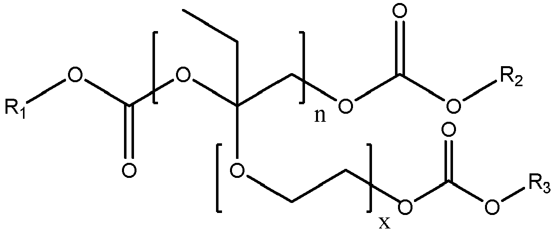 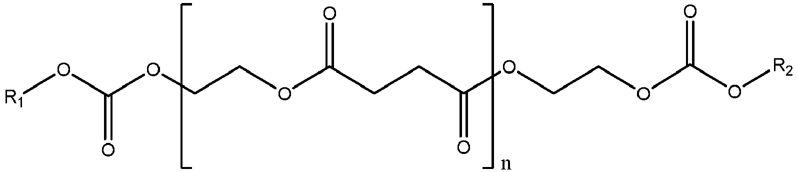 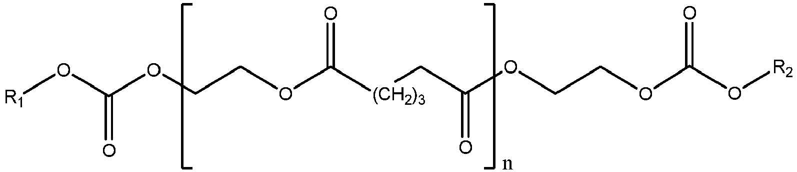 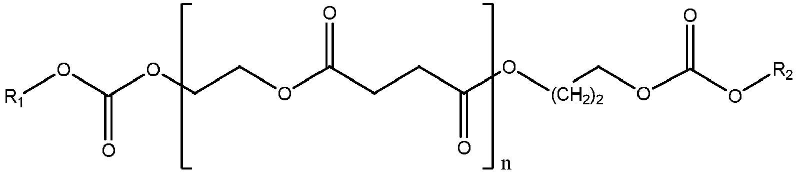 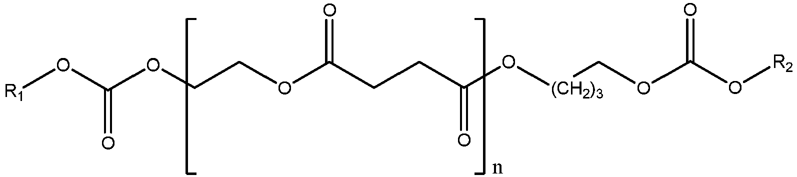 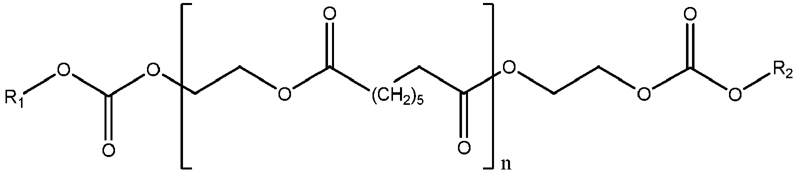 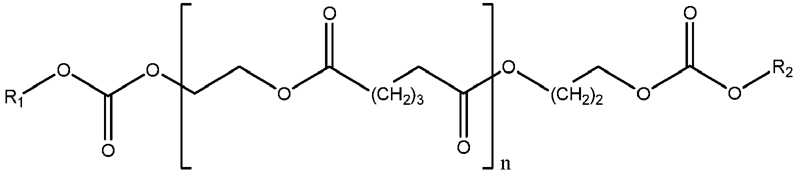 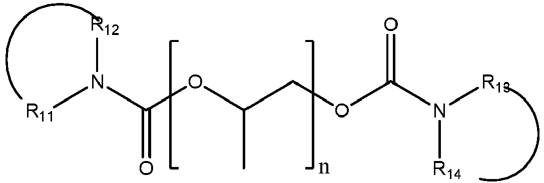 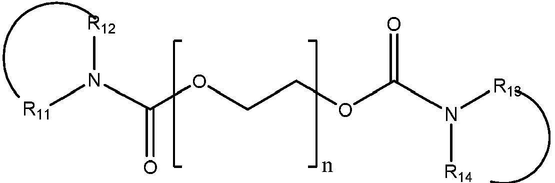 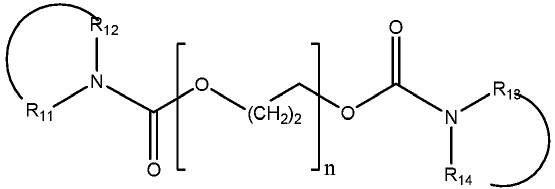 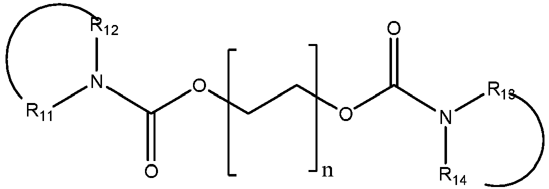 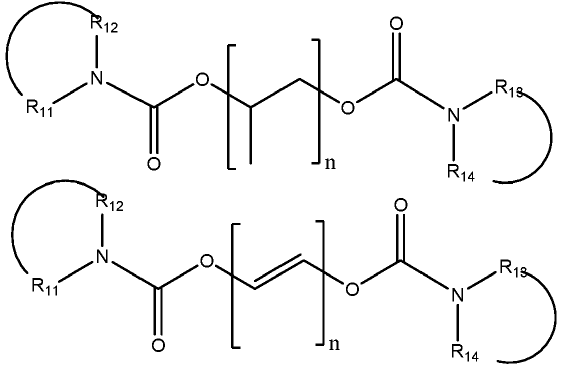 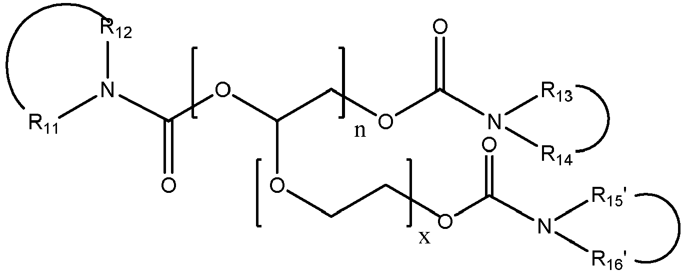 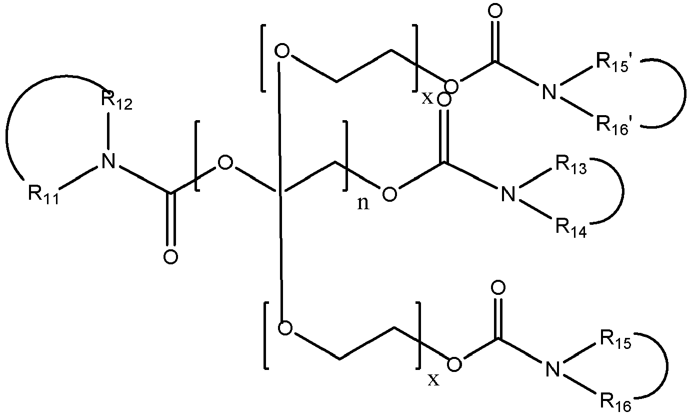 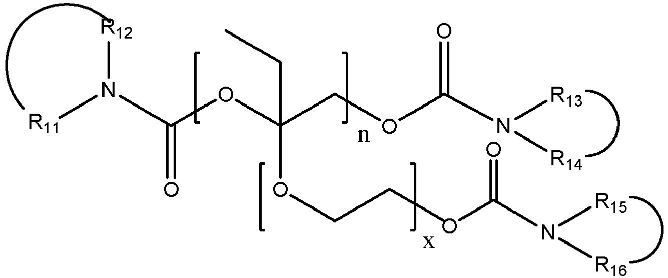 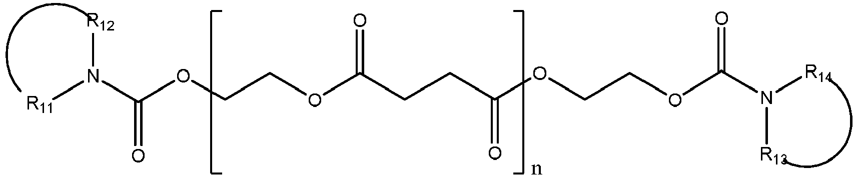 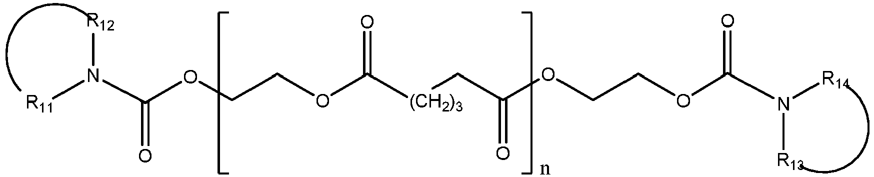 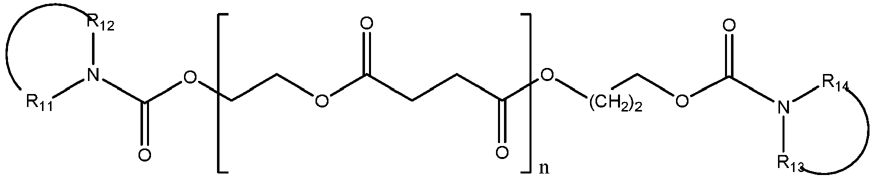 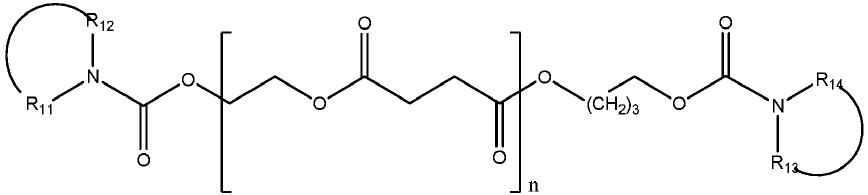 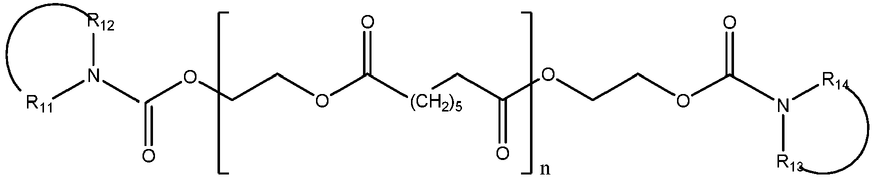 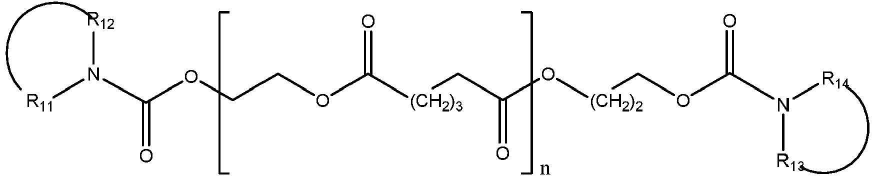
n is the number of monomer units, and the molecular weight is between 1000 and 100 000 g/mol, preferably between 5000 and 50 000 g/mol, and
R¹, R², R³, and R^{3'} independently of one another are linear or branched C₁ to C₆ alkyl, C₁ to C₆ acyl, C₃ to C₈ cycloaliphatic, C₆ to C₁₀ aryl or imide radicals, with R¹, R², R³, and R^{3'} preferably being all identical and more preferably all being methyl, ethyl or phenyl, and
R¹¹ and R¹², R¹³ and R¹⁴, R¹⁵ and R¹⁶ and also R^{15'} and R^{16'} in each case together form heterocyclic ring systems which may be aromatic or nonaromatic and are independent of one another and where these ring systems may contain further heteroatoms selected from the group of oxygen, nitrogen, and sulfur or may contain functional groups selected from the group of acyl and thioacyl.

13. A process for preparing an alkoxysilane polymer by reacting the prepolymer as set forth in any of claims 1 to 12
(A) with an aminoalkoxysilane or a mercaptoalkoxysilane, optionally in the presence of a catalyst, or
(B) with a diamine, a triamine, a dithiol or a trithiol to give a modified prepolymer and subsequently carrying out reaction with an alkoxysilane compound containing an epoxide group, where an alkoxysilane polymer is formed.

14. The process as claimed in claim 13, wherein, before the reaction steps according to variant (A) or variant (B), the prepolymer is reacted with an alcohol or with an activated alcohol, the activated alcohol preferably being glycerol carbonate.

15. The process as claimed in either of claims 13 and 14, wherein the aminoalkoxysilane in variant (A) is selected from the group of 3-aminopropyltrimethoxysilane, 3-aminopropyltriethoxysilane, N-(n-butyl)-3-aminopropyltrimethoxysilane, N-(n-butyl)-3-aminopropylmethyldimethoxysilane, N-(n-butyl)-3-aminopropyltriethoxysilane, N-ethylaminoisobutyl-trimethoxysilane, N-ethylaminoisobutylmethyldimethoxysilane, 3-piperazinopropyltrimethoxysilane, 3-piperazinopropylmethyldimethoxysilane, 3-piperazinopropyltriethoxysilane, N-(2-aminoethyl)-3-aminopropyltrimethoxysilane, N-(2-aminoethyl)-3-aminopropyltriethoxysilane, N-(2-aminoethyl)-3-aminopropylmethyldimethoxysilane, and an equimolar reaction product of piperazine and glycidoxypropyltrimethoxysilane, and
the mercaptoalkoxysilane is selected from the group of 3-mercaptopropyltrimethoxysilane, 3-mercaptopropyltriethoxysilane, 3-mercaptopropylmethyldimethoxysilane and 3-mercaptopropyltrimethoxysilane.

16. The use of a composition comprising an alkoxysilane polymer prepared by a process as claimed in any of claims 13 to 15 as a moisture-curing sealant or adhesive, **characterized in that** the alkoxysilane polymer is isocyanate-free and/or isothiocyanate-free.

## Revendications

1. Utilisation d'un prépolymère ayant au moins en moyenne 1.5 groupe carbonate de la formule (I) et (II) ou groupe thiocarbonate de la formule (Ia) et (IIa), groupe carbamate de la formule (XI) et (XII) ou groupe thiocarbamate de la formule (XIa) et (XIIa) 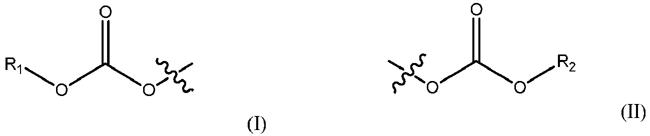 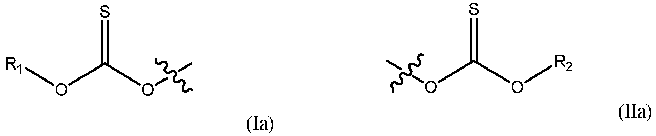 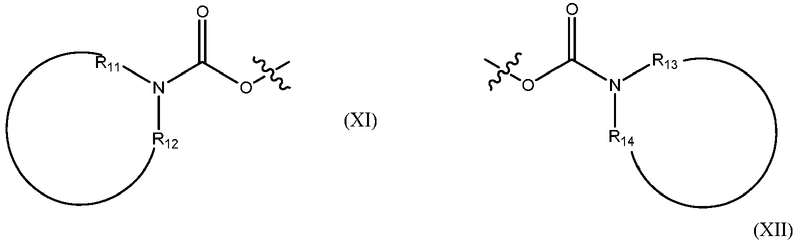 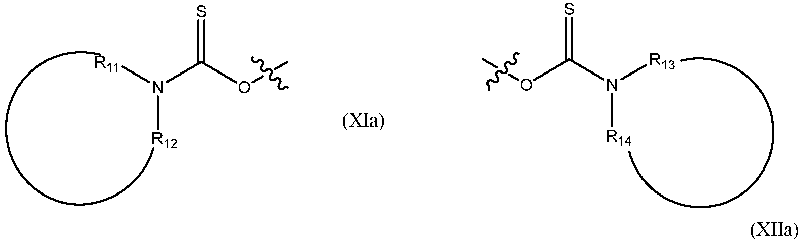
dans lesquels R¹ et R² sont indépendamment l'un de l'autre des radicaux linéaires ou ramifiés C₁ à C₆ alkyle, C₁ à C₆ acyle, C₃ à C₈ cycloaliphatiques, C₆ à C₁₀ aryle ou imide ou des alcools C₃ à C₆,
R¹¹ et R¹² et aussi R¹³ et R¹⁴ chaque fois forment ensemble des systèmes hétérocycliques qui peuvent être aromatiques ou non aromatiques et sont indépendants l'un de l'autre, et ou ces systèmes peuvent contenir d'autres hétéroatomes sélectionnés dans le groupe oxygène, azote et soufre ou peuvent comprendre des groupes fonctionnels sélectionnés dans le groupe acyle et thioacyle,
comme produit de départ pour la préparation sans isocyanate et sans isothiocyanate de polymères alcoxysilane, dont les groupes alcoxysilane sont liés via des groupes carbamate, des groupes thiocarbonate ou des groupes thiocarbamate au squelette du polymère,
où le au moins en moyenne 1.5 groupe carbonate, groupe thiocarbonate, groupe carbamate ou groupe thiocarbamate étant lié directement via chaque fois un atome d'oxygène au squelette du polymère, ce chaque fois un atome d'oxygène ayant son origine dans la réaction d'un groupe primaire, secondaire ou tertiaire hydroxyle du squelette du polymère et d'un composé réactif sélectionné dans le groupe consistant en un diorganocarbonate, un diorganothiocarbonate, un carbonate cyclique, un thiocarbonate cyclique, un dérivé N,N-dihétérocyclourée, et un dérivé N,N-dihétérocyclothiourée.

2. Utilisation selon la revendication 1, le prépolymère ayant au moins en moyenne 1.5 groupe carbonate 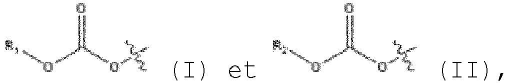
dans lequel R¹ et R² sont indépendamment l'un de l'autre des radicaux linéaires ou ramifiés C₁ à C₆ alkyle, C₁ à C₆ acyle, C₃ à C₈ cycloaliphatiques, C₆ à C₁₀ aryle ou imide ou des alcools C₃ à C₆,
comme produit de départ pour la préparation sans isocyanate et sans isothiocyanate de polymères alcoxysilane, dont les groupes alcoxysilane sont liés via des groupes carbamate ou des groupes thiocarbonate au squelette du polymère,
le au moins en moyenne 1.5 groupe carbonate étant lié directement via chaque fois un atome d'oxygène au squelette du polymère, ce chaque fois un atome d'oxygène ayant son origine dans la réaction de transestérification d'un groupe primaire, secondaire ou tertiaire hydroxyle du squelette du polymère et d'un diorganocarbonate ou d'un carbonate cyclique.

3. Utilisation selon la revendication 1 ou 2, le squelette du polymère étant linéaire ou ramifié et étant sélectionné dans le groupe consistant en polyéthers, polyoléfines, polyesters, polycarbonates, polyacrylates, polysulfides, polysiloxanes, polyacétals, et copolymères de ceux-ci.

4. Utilisation selon l'une quelconque des revendications précédentes, le dérivé N,N-dihétérocyclourée étant sélectionné dans le groupe consistant en 1,1'-carbonyldiimidazole (CDI), 1,1'-carbonyldibenzimidazole, 1,1'-carbonyldi(1,2,4)-triazole (CDT), 1,1'-carbonylbis(2-méthylimidazole), 1,1'-carbonyldibenzotriazole, et carbonylbiscaprolactam (CBC).

5. Utilisation selon l'une quelconque des revendications précédentes, le au moins en moyenne 1.5 groupe carbonate, groupe thiocarbonate, groupe carbamate ou groupe thiocarbamate du prépolymère de la formule générale III, IIIa, XIII ou XIIIa 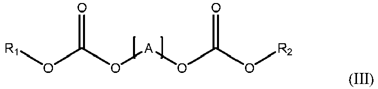 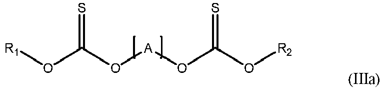 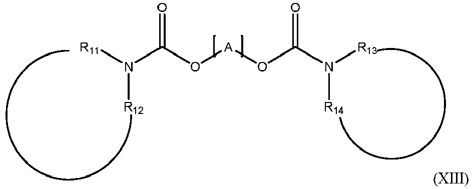 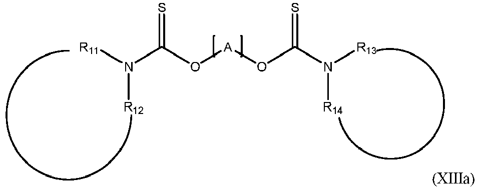
[A] désignant le squelette du polymère et
R₁, R₂, R₁₁, R₁₂, R₁₃ et R₁₄ ayant la même signification que dans la revendication 1,
étant arrangés aux extrémités terminales du squelette du polymère.

6. Utilisation selon l'une quelconque des revendications précédentes, R¹ et R² étant identiques et préférablement étant
méthyl, éthyl, phényl, succinimide ou maléimide, plus préférablement méthyl ou phényl.

7. Utilisation selon l'une quelconque des revendications précédentes,
(a) au moins une partie du squelette du polymère étant linéaire et préférablement le squelette du polymère entier est linéaire, ou
(b) au moins une partie du squelette du polymère est ramifiée et possède un ou plusieurs ramifications.

8. Utilisation selon la revendication 7, où la une ou plusieurs ramifications pouvant comprendre un ou plusieurs groupes éther, ester, carbonate, acrylate ou sulfide et optionnellement avoir un groupe terminal de la formule (IV) ou (XIV) 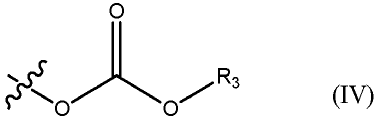 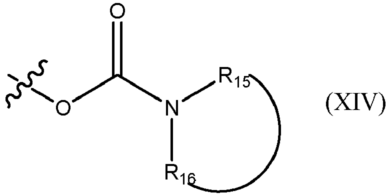 R₃ ayant la même définition que R₁ et R₂, et R¹⁵ et R¹⁶ chaque fois forment ensemble un système hétérocyclique ayant la même définition que les systèmes hétérocycliques formés respectivement de R¹¹ et R¹² et de R¹³ et R¹⁴.

9. Utilisation selon la revendication 8, chaque ramification ayant un groupe terminal de la formule IV ou de la formule XIV.

10. Utilisation selon l'une quelconque des revendications précédentes, le squelette du polymère étant sélectionné dans le groupe consistant en polyéthers, polyesters, polycarbonates, polysulfides, polysiloxanes ou polyacrylates et des copolymères de ceux-ci.

11. Utilisation selon l'une quelconque des revendications précédentes, le squelette du polymère étant un polyéther, préférablement un polyéthylène glycol ou un polypropylène glycol, plus préférablement un polypropylène glycol linéaire ou à plusieurs bras.

12. Utilisation selon l'une quelconque des revendications précédentes, le prépolymère étant sélectionné dans le groupe consistant en 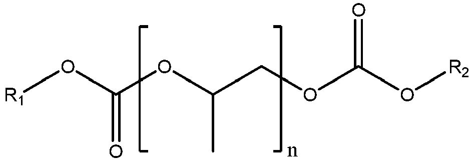 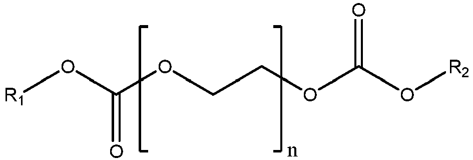 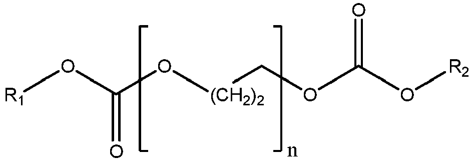 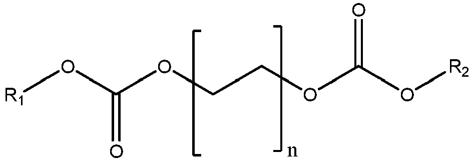 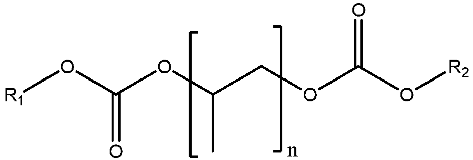 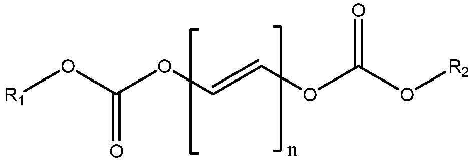 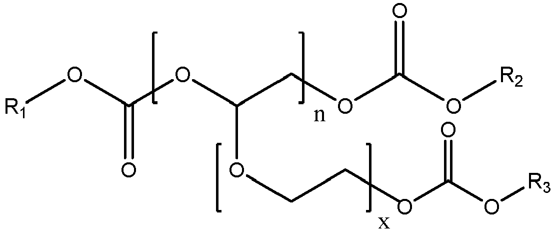 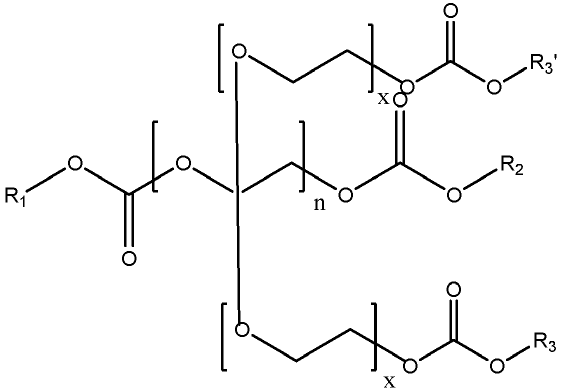 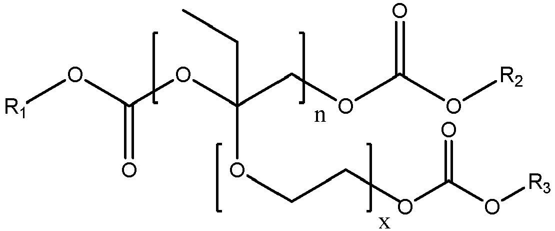 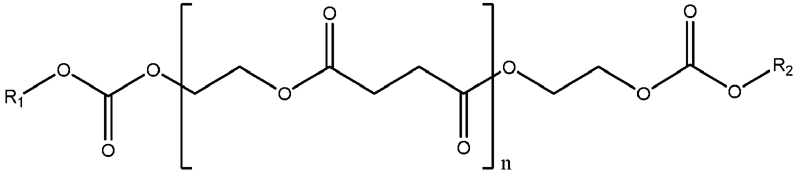 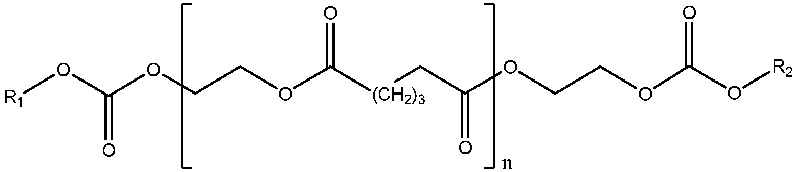 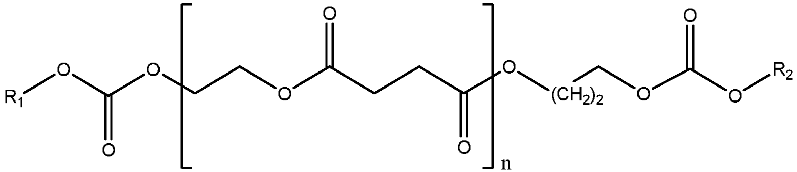 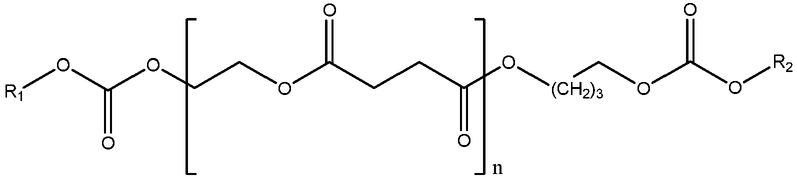 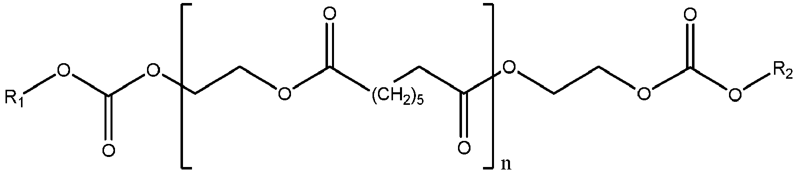 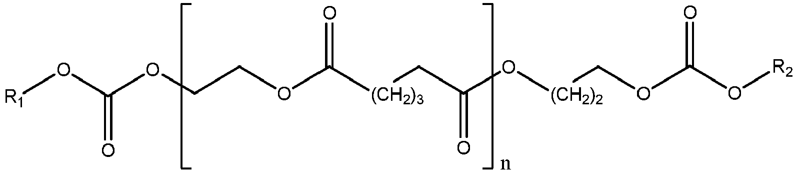 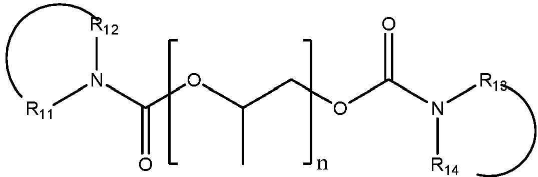 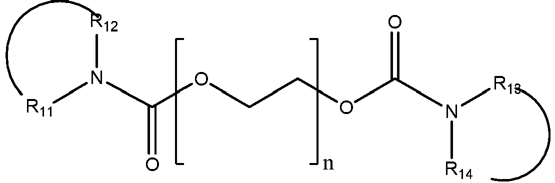 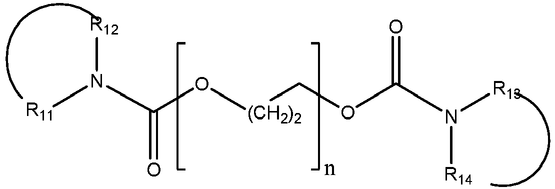 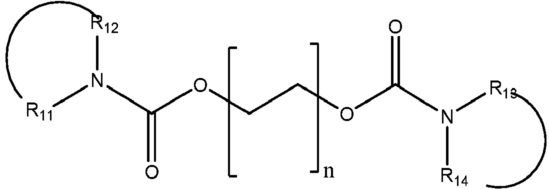 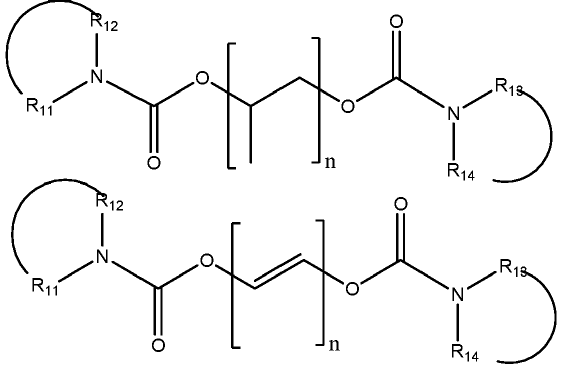 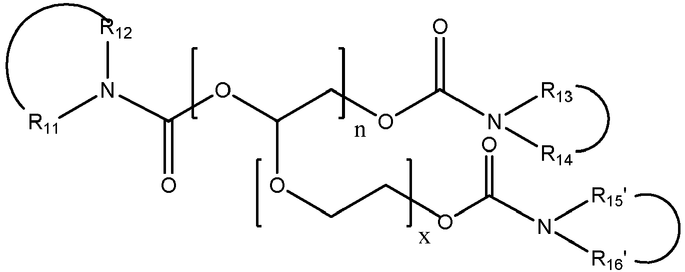 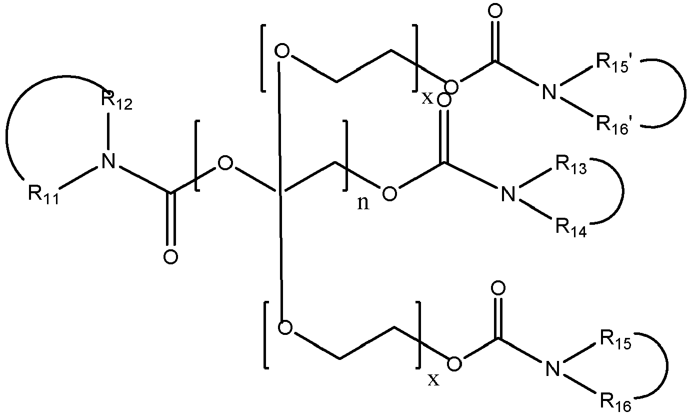 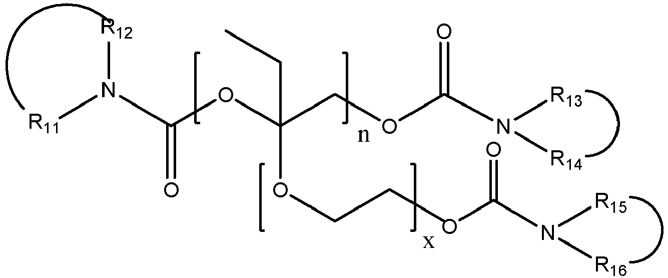 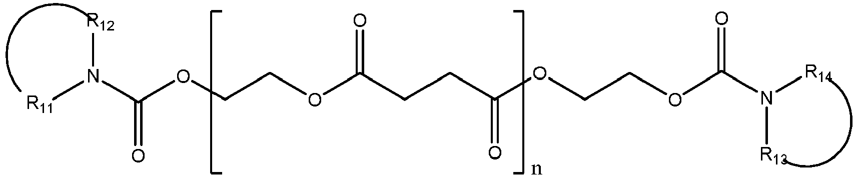 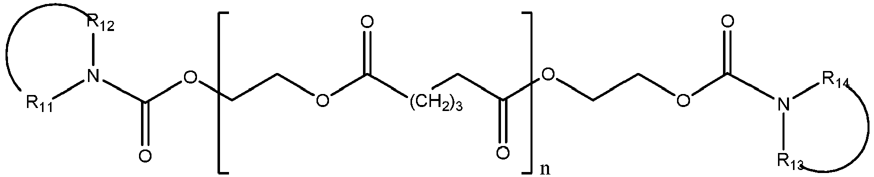 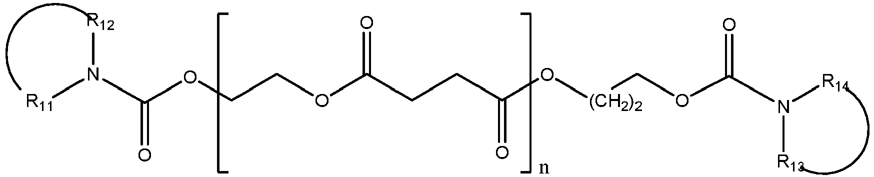 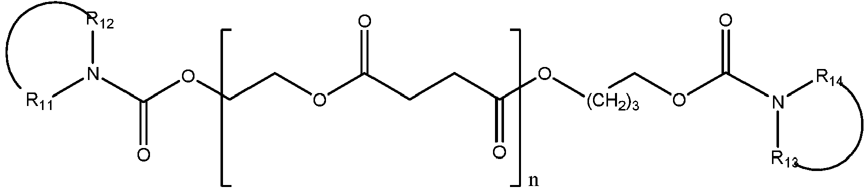 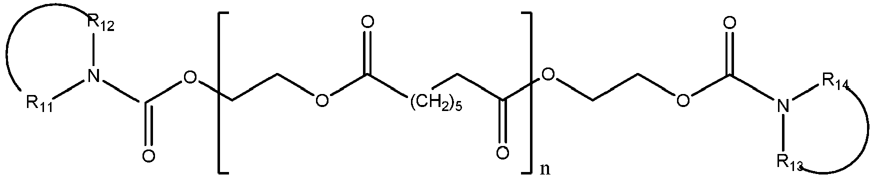 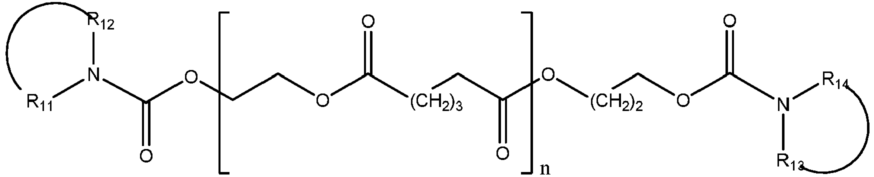
n étant le nombre d'unités monomère, et le poids moléculaire étant entre 1000 et 100 000 g/mol, préférablement entre 5000 et 50 000 g/mol, et
R¹, R², R³, et R^{3'} étant indépendamment l'un de l'autre des radicaux linéaires ou ramifiés C₁ à C₆ alkyle, C₁ à C₆ acyle, C₃ à C₈ cycloaliphatiques, C₆ à C₁₀ aryle ou imide, avec R¹, R², R³, et R^{3'} préférablement étant tous identiques et plus préférablement étant tous méthyl, éthyl ou phényl, et
R¹¹ et R¹², R¹³ et R¹⁴, R¹⁵ et R¹⁶ ainsi que R^{15'} et R^{16'} chaque fois formant ensemble des systèmes hétérocycliques, qui peuvent être aromatiques ou non aromatiques et sont indépendants l'un de l'autre et ou ces systèmes pouvant contenir d'autres hétéroatomes sélectionnés dans le groupe oxygène, azote et soufre ou pouvant comprendre des groupes fonctionnels sélectionnés dans le groupe acyle et thioacyle.

13. Procédé pour préparer un polymère alcoxysilane en faisant réagir le prépolymère comme indiqué selon l'une quelconque des revendications 1 à 12
(A) avec un aminoalcoxysilane ou un mercaptoalcoxysilane, optionnellement en présence d'un catalysateur, ou
(B) avec une diamine, une triamine, un dithiol ou un trithiol pour donner un prépolymère modifié et ensuite procéder à une réaction avec un composé alcoxysilane contenant un groupe époxyde,
un polymère alcoxysilane étant formé.

14. Procédé selon la revendication 13, le prépolymère étant soumis à une réaction avec un alcool ou avec un alcool activé, l'alcool activé étant préférablement du carbonate de glycérol, avant l'étape de réaction selon la variante (A) ou la variante (B).

15. Procédé selon l'une des revendications 13 et 14, l'aminoalcoxysilane dans la variante (A) étant sélectionné dans le groupe 3-aminopropyltriméthoxysilane, 3-aminopropyltriéthoxysilane, N-(n-butyl)-3-aminopropyltriméthoxysilane, N-(n-butyl)-3-aminopropylméthyldiméthoxysilane, N-(n-butyl)-3-aminopropyltriéthoxysilane, N-éthylaminoisobutyl-triméthoxysilane, N-éthylaminoisobutylméthyldiméthoxysilane, 3-pipérazinopropyltriméthoxysilane, 3-pipérazinopropylmethyldiméthoxysilane, 3-pipérazinopropyltriéthoxysilane, N-(2-aminoéthyl)-3-aminopropyltriméthoxysilane, N-(2-aminoéthyl)-3-aminopropyltriéthoxysilane, N-(2-aminoéthyl)-3-aminopropylméthyldiméthoxysilane, et un produit de réaction équimolaire de pipérazine et glycidoxypropyltriméthoxysilane, et
le mercaptoalcoxysilane étant sélectionné dans le groupe de 3-mercaptopropyltriméthoxysilane, 3-mercaptopropyltriéthoxysilane, 3-mercaptopropylméthyldiméthoxysilane et 3-mercaptopropyltriméthoxysilane.

16. Utilisation d'un mélange comprenant un polymère alcoxysilane préparé selon un procédé selon l'une quelconque des revendications 13 à 15 comme un produit d'étanchéité durcissant à l'humidité ou adhésif, **caractérisé en ce que** le polymère alcoxysilane est sans isocyanate et/ou sans isothiocyanate.
